# EUROPEAN PATENT APPLICATION

(11) **EP 4 647 203 A1**
(43) Date of publication of application: **12.11.2025**
(21) Application number: 25175041.0
(22) Date of filing: 08.05.2025
(51) Int. Cl.: B23K 26/03, B23K 26/26, B23K 26/32, B23K 26/38, B23K 101/00, B23K 101/18

(54) **SYSTEM AND METHOD FOR WELDING BLANKS TO ONE ANOTHER, COMPRISING THE TRACKING OF A BLANK EDGE FOR LASER CUTTING**

(30) Priority: 08.05.2024 US 202463643947 P; 18.03.2025 US 202563773560 P; 02.05.2025 US 202519197053
(71) Applicant: Magna International Inc., Aurora, ON L4G 7K1 (CA)
(72) Inventor: Petrin, Georg, Aurora, Ontario, L4G 7K1 (CA); Bertalan, Dominik, Aurora, Ontario, L4G 7K1 (CA); Amar, Gerhard, Aurora, Ontario, L4G 7K1 (CA); Stranz, Andreas, Aurora, Ontario, L4G 7K1 (CA)
(74) Representative: Grünecker Patent- und Rechtsanwälte PartG mbB

(57) **Abstract**

The present application relates to a system (200) for cutting blanks (114, 116). The blanks (114, 116) include a first blank (114) and a second blank (160). The system (200) comprises an edge detector (150) configured to determine a configuration of an edge (130, 134) of the first blank (114), a cutter (152) configured to cut an edge (132, 136) of the second blank (116); and one or more processors (154) operatively connected with the edge detector (150) and the cutter (152), the one or more processors (154) controlling the cutter (152) to cut the edge (132, 136) of the second blank (116) into a configuration based on the detected configuration of the edge (130, 134) of the first blank (114).

## Description

### BACKGROUND

### RELATED APPLICATIONS

The present patent application relates to U.S. Provisional Patent Application Serial No. 63/643,947, filed May 08, 2024 and U.S. Provisional Patent Application Serial No. 63/773,560, filed March 18, 2025, which are each incorporated herein by reference in their entirety.

### Field

The present patent application relates to systems and methods for welding blanks to one another for use in an automobile.

### Description of Related Art

Laser welding is known in manufacturing as an efficient and effective method of connecting two or more blanks, i.e., work pieces, to one another to form components (e.g., door rings) for use in an automobile. In a typical laser welding operation, a fixture assembly is provided for securing the blanks into a desired position during the laser welding operation. The desired position typically includes two or more surfaces of the blanks disposed in alignment with one another such that a union between the blanks may be welded. Conventional fixture assemblies typically utilize a series of clamps for holding the blanks in place during the laser welding operation. An issue with such fixture assemblies is that minor variations in blank dimensions can cause the blanks to be misaligned with one another once they are clamped in place, thus creating gaps that cannot be laser welded without adding additional material, e.g., filler wire. Accordingly, excess time and materials are often required to execute a successful laser welding operation.

In an attempt to address this issue, and to correct tolerance stack-up issues with complex components, it is known to shear/cut/trim one or more of the blanks prior to being welded in order to provide a desired size and/or shape of an edge of the blank and/or to provide reduced weight of the final component. In some cases, shearing/cutting/trimming can provide a rough/burred edge that can further create gaps between the blanks, which can be difficult to bridge during the laser welding operation without added filler wire/material. Furthermore, the additional step of shearing/cutting/trimming may also provide increased cycle time and costs, especially since the blanks typically have to be unclamped and relocated multiple times prior to the laser welding operation.

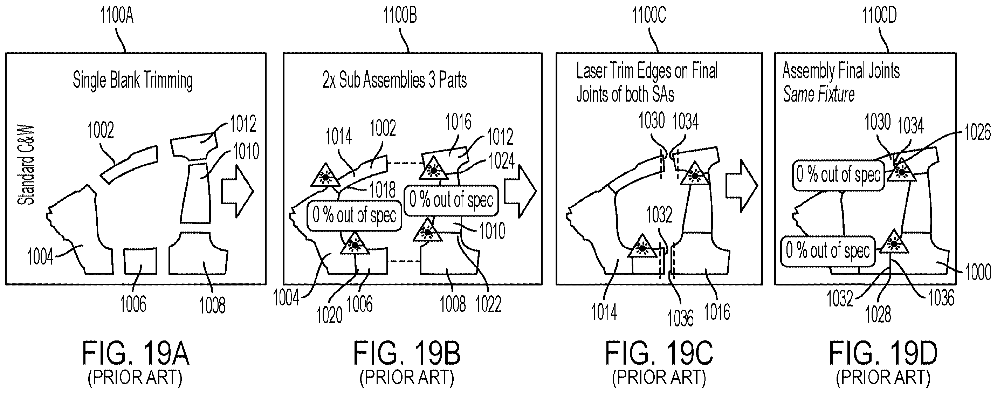

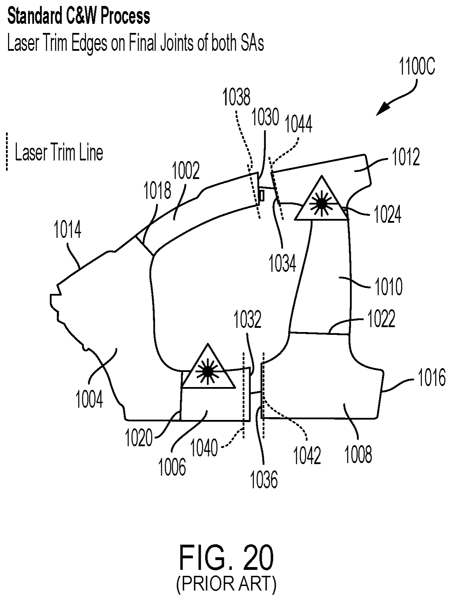

FIGS. 19A-19D and 20 show prior art cut and weld procedures 1100A-1100D for a door ring 1000 of an automobile. As shown in FIG. 19A, at procedure 1100A, six blanks 1002, 1004, 1006, 1008, 1010, and 1012 that form the door ring 1000 are disposed adjacent to each other. Each of the six blanks 1002, 1004, 1006, 1008, 1010, and 1012 may undergo single blank trimming prior to the procedure 1100A. The blanks may be secured/held in their desired positions, for example, using conventional fixture assemblies for the laser welding operation. The blank 1004 may be held in a fixed position during the laser welding operation, while the blanks 1002 and 1006 may be configured to be movable towards the fixed blank 1004 prior to the laser welding operation. Similarly, the blank 1010 may be held in a fixed position during the laser welding operation, while the blanks 1008 and 1012 may be configured to be movable towards the fixed blank 1010 prior to the laser welding operation.

Weld joint 1018 is to be formed between the blanks 1002 and 1004 along a weld interface, and weld joint 1020 is to be formed between the blanks 1004 and 1006 along a weld interface. The welded blanks 1002, 1004 and 1006 form a first subassembly 1014. Weld joint 1022 is to be formed between the blanks 1008 and 1010 along a weld interface, and weld joint 1024 is to be formed between the blanks 1010 and 1012 along a weld interface. The welded blanks 1008, 1010 and 1012 form a second subassembly 1016.

At procedure 1100B, two subassemblies 1014 and 1016 of the door ring 1000 are formed and are as shown in FIG. 19B. For example, the blanks 1002, 1004, and 1006 are joined/welded to each other at the weld joints 1018 and 1020 using the laser welding operation to form the first subassembly 1014. The blanks 1008, 1010, and 1012 are joined/welded to each other at the weld joints 1022 and 1024 using the laser welding operation to form the first subassembly 1016.

At procedure 1100C, both edges 1030 and 1032 of the subassembly 1014 of the door ring 1000 are laser trimmed/cut/sheared and both edges 1034 and 1036 of the subassembly 1016 of the door ring 1000 are also laser trimmed/cut/sheared. That is, both edges 1030 and 1034 at which a weld joint 1026 is to be formed between the blanks 1014 and 1016 and along a weld interface between the blanks 1014 and 1016 are laser trimmed/cut/sheared. Similarly, both edges 1032 and 1036 at which a weld joint 1028 is to be formed between the blanks 1014 and 1016 and along a weld interface between the blanks 1014 and 1016 are laser trimmed/cut/sheared.

At procedure 1100D, two subassemblies 1014 and 1016 of the door ring 1000 are joined to each other at cut edges 1030 and 1034 and at cut edges 1032 and 1036 to form the weld joints 1026 and 1028 using the laser welding operation to form the door ring 1000.

That is, both edges 1030 and 1034 on the two subassemblies 1014 and 1016 that are opposing and adjacent to each other (and that later form the laser weld joint 1026) are laser cut/trimmed/sheared at procedure 1100C (i.e., before forming the laser weld joint 1026 at procedure 1100D). Similarly, both edges 1032 and 1036 on the two subassemblies 1014 and 1016 that are opposing and adjacent to each other (and that later form the laser weld joint 1028) are laser cut/trimmed/sheared at procedure 1100C (i.e., before forming the laser weld joint 1028 at procedure 1100D).

International Patent Application Publication No. WO2022213219 A1 ("International Patent Application '219"), which is titled "system for welding multiple blanks into a component", is commonly owned by the Applicant of the present patent application. As described in detail above with respect to FIGS. 19A-19D and FIG. 20, the current production of Tailor Welded Blank (TWB) multiple piece door rings, as also described in International Patent Application '219, may require a total number of four laser cuts of the final weld seams on the door ring component. That is, one laser cut on each of the edges 1030 and 1032 of the subassembly 1014 and one laser cut on each of the edges 1034 and 1036 of the subassembly 1016. For example, four laser trim lines (indicating the four laser cuts) 1038, 1040, 1042, and 1044 are shown in FIG. 20. That is, two laser cuts 1038 and 1044 are made (at procedure 1100C) to form the laser weld joint 1026 and two laser cuts 1040 and 1042 are made (at procedure 1100C) to form the laser weld joint 1028. The prior art method requires exactly two parallel cuts 1038 and 1044 or 1040 and 1042 at each weld interface to form the weld joint. The prior art method involves four times (as there are four laser cuts) increased cutting cycle time, four times increased cutting gas, four times increased laser power, four times increased costs, etc. The prior art method is also difficult to teach on the manipulator (e.g., may include robots, gantry systems, and all other related options) side.

The present patent application endeavors to provide various improvements over known systems and methods for welding blanks to one another for use in an automobile.

### SUMMARY

In one embodiment of the present patent application, a system for welding blanks to one another is provided. The blanks include a first blank and a second blank. A weld joint is to be formed between the first blank and the second blank along a weld interface. The system comprises an edge detector configured to determine a configuration of an edge of the first blank; a cutter configured to cut an edge of the second blank; one or more processors operatively connected with the edge detector and the cutter, the one or more processors controlling the cutter to cut the edge of the second blank into a configuration based on the detected configuration of the edge of the first blank; and a welder operatively connected with the one or more processors and configured to weld the detected edge of the first blank to the cut edge of the second blank.

In another embodiment of the present patent application, a method for welding blanks to one another is provided. The blanks include a first blank and a second blank. A weld joint is to be formed between the first blank and the second blank along a weld interface. The method comprises detecting, using an edge detector, a configuration of an edge of the first blank; controlling, using one or more processors, a cutter to cut an edge of the second blank into a configuration based on the configuration of the edge of the first blank; and welding, using a welder, the detected edge of the first blank to the cut edge of the second blank.

In yet another embodiment, a system for cutting blanks is provided. The blanks include a first blank and a second blank. The system includes an edge detector configured to determine a configuration of an edge of the first blank; a cutter configured to cut an edge of the second blank; and one or more processors operatively connected with the edge detector and the cutter, the one or more processors controlling the cutter to cut the edge of the second blank into a configuration based on the detected configuration of the edge of the first blank.

These and other aspects of the present patent application, as well as the methods of operation and functions of the related elements of structure and the combination of parts and economies of manufacture, will become more apparent upon consideration of the following description with reference to the accompanying drawings, all of which form a part of this specification, wherein like reference numerals designate corresponding parts in the various figures. In one embodiment of the present patent application, the structural components illustrated herein are drawn to scale. It is to be expressly understood, however, that the drawings are for the purpose of illustration and description only and are not intended as a definition of the limits of the present patent application. It shall also be appreciated that the features of one embodiment disclosed herein can be used in other embodiments disclosed herein. As used in the specification and in the claims, the singular form of "a", "an", and "the" include plural referents unless the context clearly dictates otherwise. In addition, as used in the specification and the claims, the term "or" means "and/or" unless the context clearly dictates otherwise. It should also be appreciated that some of the components and features discussed herein may be discussed in connection with only one (singular) of such components, and that additional like components which may be disclosed herein may not be discussed in detail for the sake of reducing redundancy.

Other aspects, features, and advantages of the present patent application will become apparent from the following detailed description, the accompanying drawings, and the appended claims.

### BRIEF DESCRIPTION OF THE DRAWINGS

Various embodiments are disclosed, by way of example only, with reference to the accompanying schematic drawings in which corresponding reference symbols indicate corresponding parts, in which
FIG. 1 shows a system for welding blanks to one another in accordance with an embodiment of the present patent application, where a cutter and a welder of the system are shown;

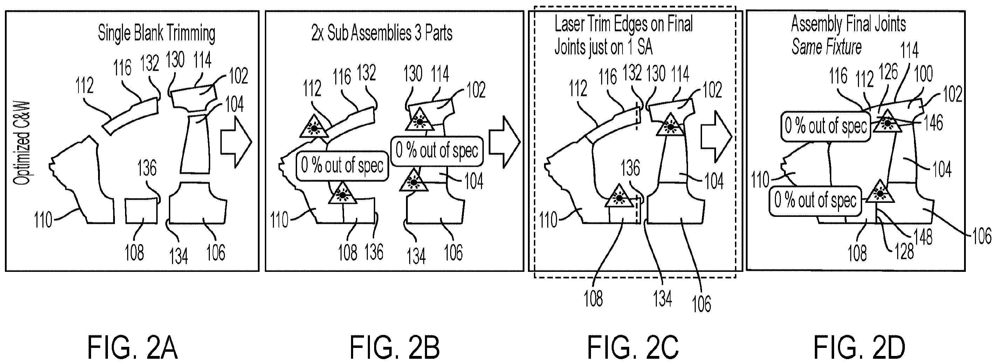

FIGS. 2A-2D show cut and weld procedures for a door ring of an automobile in accordance with an embodiment of the present patent application, wherein blanks formed by single blank trimming procedure are shown in FIG. 2A, a procedure for forming two (e.g., first and second) subassemblies of the door ring is shown in FIG. 2B, a procedure for trimming/cutting/shearing an edge of the second subassembly based on a detected edge of the first subassembly at each of the two weld joints of the door ring is shown in FIG. 2C, and a procedure for welding the cut edge of the second subassembly and the detected edge of the first subassembly of the door ring is shown in FIG. 2D, wherein the door ring includes a single door ring;
FIG. 3A shows two subassemblies of the door ring in accordance with an embodiment of the present patent application, wherein the two subassemblies are shown before the trimming/cutting/shearing and edge detection procedures;
FIG. 3B shows a fixture assembly configured to secure/hold the blanks/blank subassemblies in their desired positions during the welding procedure in accordance with an embodiment of the present patent application;
FIG. 3C shows an exemplary door ring of the automobile in accordance with an embodiment of the present patent application;
FIG. 4 shows a detailed view of the trimming/cutting/shearing procedure of FIG. 2C, wherein both trim/cut/shear lines and detected edges used for guidance are shown;
FIG. 5 shows a perspective view of the system for welding blanks to one another in accordance with an embodiment of the present patent application, wherein an optical coherence tomography sensor/detector is used as an edge detector that is configured to determine a configuration of an edge of the first blank/subassembly;
FIG. 6A shows a front view of the system of FIG. 5;
FIG. 6B shows a side view of the system of FIG. 5;
FIG. 7 shows a perspective view of the system for welding blanks to one another in accordance with an embodiment of the present patent application, wherein a laser triangulation sensor/detector is used as an edge detector that is configured to determine a configuration of an edge of the first blank/subassembly;
FIG. 8A shows a front view of the system of FIG. 7;
FIG. 8B shows a side view of the system of FIG. 7;
FIG. 9 shows a perspective view of the system for welding blanks to one another in accordance with an embodiment of the present patent application, wherein a tilting mechanical guidance system is used;
FIG. 10A shows a front view of the system of FIG. 9;
FIG. 10B shows a side view of the system of FIG. 9;
FIG. 11 shows a perspective view of the system for welding blanks to one another in accordance with an embodiment of the present patent application, wherein a sliding mechanical guidance system is used;
FIG. 12A shows a front view of the system of FIG. 11;
FIG. 12B shows a side view of the system of FIG. 11;
FIG. 13 shows three different embodiments for a single side cut system in accordance with an embodiment of the present patent application;
FIG. 14 shows crash simulations of the door rings in accordance with an embodiment of the present patent application, wherein the door rings may include different material blanks;

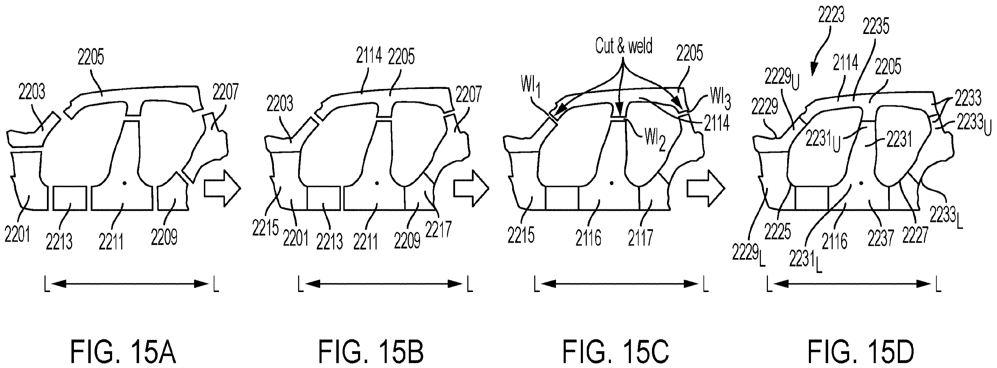

FIGS. 15A-15D show cut and weld procedures for a door ring of an automobile in accordance with an embodiment of the present patent application, wherein blanks formed by single blank trimming procedure are shown in FIG. 15A, a procedure for forming two (e.g., first and second) subassemblies of the door ring is shown in FIGS. 15B and 15C, a procedure for trimming/cutting/shearing an edge of the second subassembly based on a detected edge of the first subassembly at each of the three weld interfaces of the door ring is shown in FIG. 15C, and a procedure for welding the cut edge of the second subassembly and the detected edge of the first subassembly of the door ring is shown in FIG. 15D, wherein the door ring includes a double door ring;

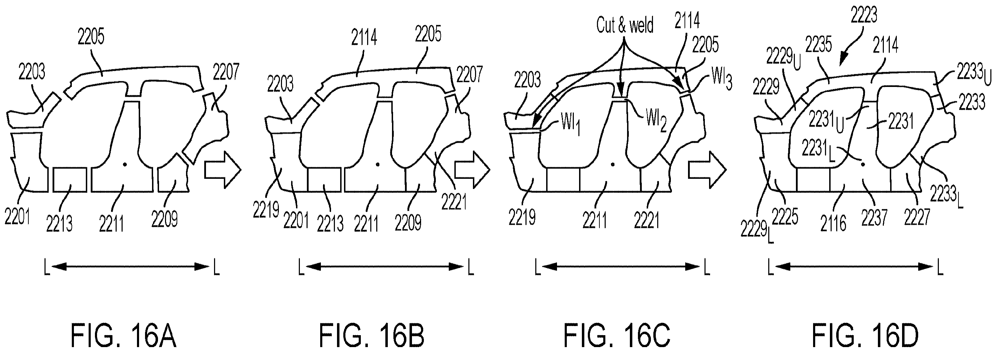

FIGS. 16A-16D show cut and weld procedures for a door ring of an automobile in accordance with another embodiment of the present patent application, wherein blanks formed by single blank trimming procedure are shown in FIG. 16A, a procedure for forming two (e.g., first and second) subassemblies of the door ring is shown in FIGS. 16B and 16C, a procedure for trimming/cutting/shearing an edge of the second subassembly based on a detected edge of the first subassembly at each of the three weld interfaces of the door ring is shown in FIG. 16C, and a procedure for welding the cut edge of the second subassembly and the detected edge of the first subassembly of the door ring is shown in FIG. 16D, wherein the door ring includes a double door ring;

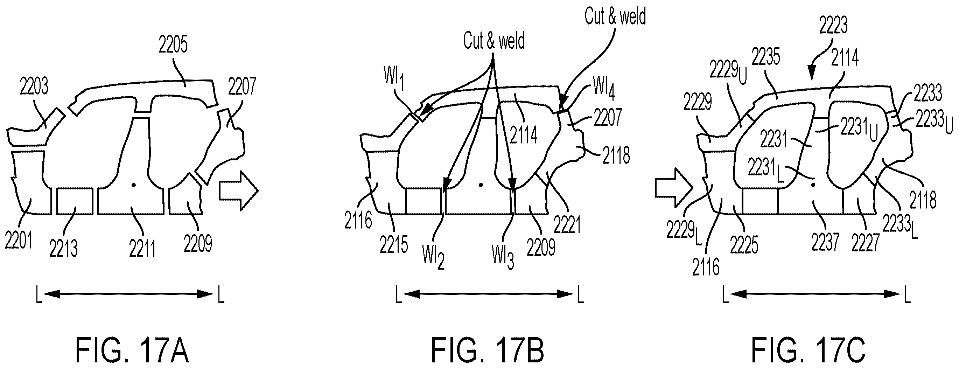

FIGS. 17A-17C show cut and weld procedures for a door ring of an automobile in accordance with another embodiment of the present patent application, wherein blanks formed by single blank trimming procedure are shown in FIG. 17A, a procedure for forming three (e.g., first, second, and third) subassemblies of the door ring is shown in FIG. 17B, a procedure for trimming/cutting/shearing an edge of one of the first/second/third subassembly based on a detected edge of the other of the first/second/third subassembly at each of the four weld interfaces of the door ring is shown in FIG. 17B, and a procedure for welding the cut edge of the second subassembly and the detected edge of the first subassembly of the door ring is shown in FIG. 17C, wherein the door ring includes a double door ring;

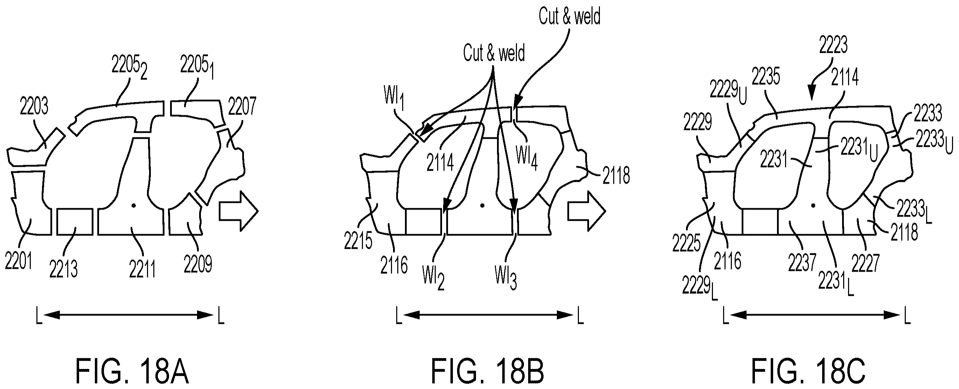

FIGS. 18A-18C show cut and weld procedures for a door ring of an automobile in accordance with another embodiment of the present patent application, wherein blanks formed by single blank trimming procedure are shown in FIG. 18A, a procedure for forming three (e.g., first, second, and third) subassemblies of the door ring is shown in FIG. 18B, a procedure for trimming/cutting/shearing an edge of one of the first/second/third subassembly based on a detected edge of the other of the first/second/third subassembly at each of the four weld interfaces of the door ring is shown in FIG. 18B, and a procedure for welding the cut edge of the second subassembly and the detected edge of the first subassembly of the door ring is shown in FIG. 18C, wherein the door ring includes a double door ring;
FIGS. 19A-19D show prior art cut and weld procedures for a door ring of an automobile, wherein blanks after single blank trimming procedure are shown in FIG. 19A, a procedure for forming two subassemblies of the door ring is shown in FIG. 19B, a procedure for laser trimming both edges of each laser weld joint of the door ring is shown in FIG. 19C, and a procedure for laser welding the laser trimmed edges of the door ring is shown in FIG. 19D; and
FIG. 20 shows a detailed view of the prior art laser trimming procedure of FIG. 19C, where laser trim lines are shown in each of the subassemblies at each laser weld joint of the door ring.

### DETAILED DESCRIPTION OF THE DRAWINGS

The present patent application provides systems and methods for welding blanks to one another for use in an automobile. The automobile may be interchangeably referred to as a vehicle. The automobile or vehicle may include any type of passenger or commercial automobile/vehicle such as a car, a truck, a sport utility vehicle, a crossover vehicle, a van, a minivan, a taxi, a bus, etc. The blanks may be welded to one another to form a member for use in an automobile. The member may interchangeably referred to a component or a part. For example, in one embodiment, the member may be a door ring. In another embodiment, the member may be a roof cross member, an underbody cross member, a crash beam, a front bumper, a rear bumper, etc. The method and the system of the present patent application may be used for other automobile components/parts that are currently designed as tailored welded blanks, or that could potentially be designed as tailored welded blanks in the future. In yet another embodiment, the method and the system of the present patent application may be used in applications for patch designs especially for front cradles and for rear cradles in automobiles.

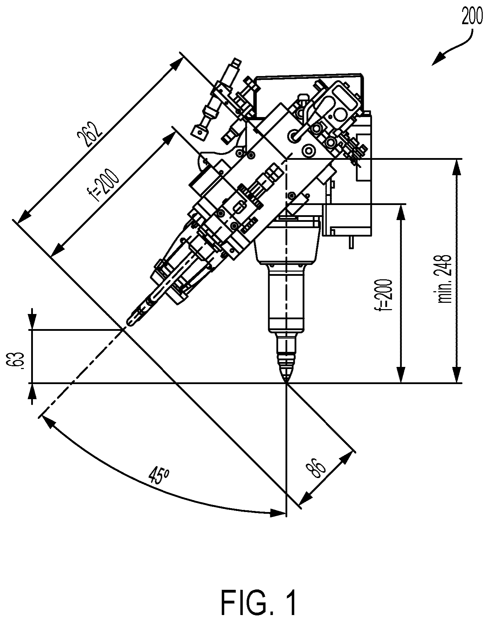

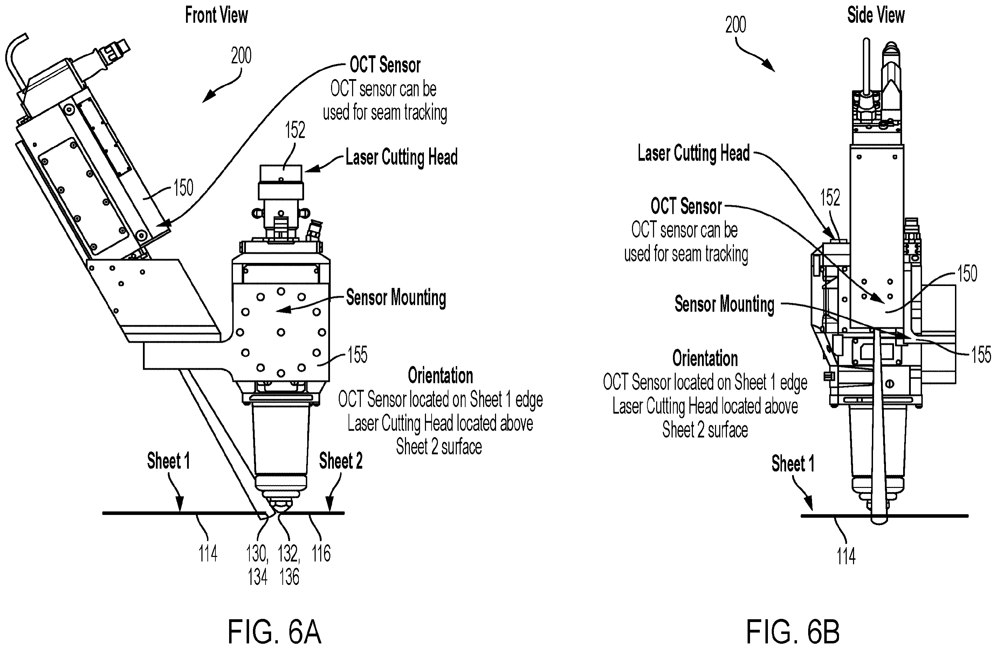

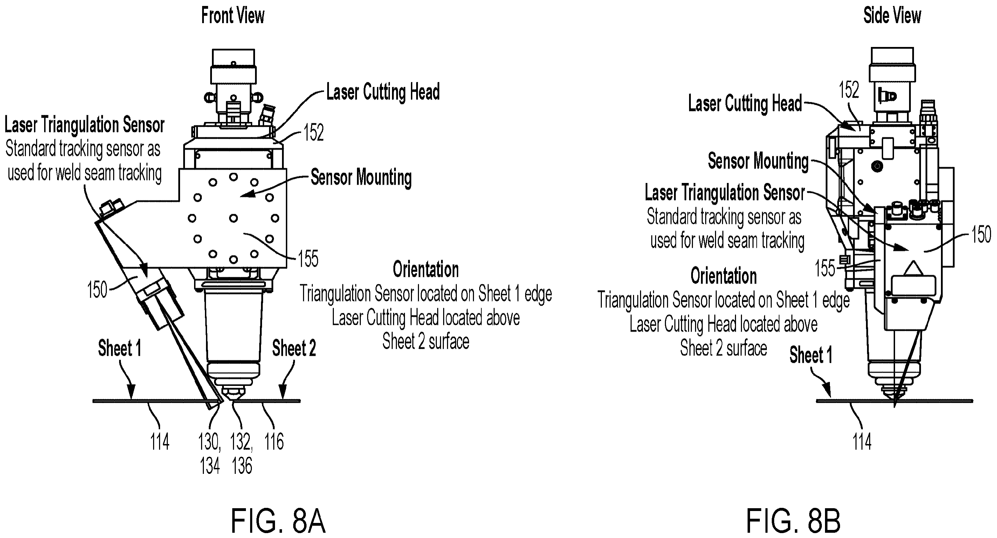

In one embodiment, referring to FIGS. 1-8B, the present patent application provides a system 200 for welding blanks 114 and 116 to one another. The blanks 114 and 116 may include a first blank 114 and a second blank 116. A weld joint 126, 128 is to be formed between the first blank 114 and the second blank 116 along a weld interface 146, 148. For example, two weld joints 126, 128 are formed between the first blank 114 and the second blank 116 along the weld interfaces 146, 148 as shown in FIG. 2D. The number of weld joints (and their corresponding weld interfaces) between the first blank 114 and the second blank 116 may vary.

The system 200 may also include an edge detector 150 that is configured to determine a configuration of an edge 130, 134 of the first blank 114; a cutter 152 that is configured to cut an edge 132, 136 of the second blank 116; and one or more processors 154 may be operatively connected with the edge detector 150 and the cutter 152. The one or more processors 154 may be configured for controlling the cutter 152 to cut the edge 132, 136 of the second blank 116 into a configuration based on the detected configuration of the edge 130, 134 of the first blank 114. The system 200 may also include a welder 156 (as shown in FIG. 1) that is operatively connected with the one or more processors 154 and that is configured to weld the detected edge 130, 134 of the first blank 114 to the cut edge 132, 136 of the second blank 116.

In another embodiment, the present patent application provides a system for cutting blanks. The blanks include a first blank and a second blank. The system includes an edge detector configured to determine a configuration of an edge of the first blank; a cutter configured to cut an edge of the second blank; and one or more processors operatively connected with the edge detector and the cutter, the one or more processors controlling the cutter to cut the edge of the second blank into a configuration based on the detected configuration of the edge of the first blank. That is, the welder may be optional in this embodiment.

The edge detector 150 may also be referred to as an edge sensor. The edge detector 150 may generally include a light source (e.g., laser or optical), a transmitter and a receiver. In one embodiment, the reflection time of the laser/optical beam (from the edge) may be measured. The reflection time may then be used in calculating the two or three dimensional images of the edge of the first blank 114. The edge detector 150 may be operatively connected with the one or more processors 154.

The edge detector 150 may be operatively connected with the cutter 152. The edge detector 150 may be configured to move along with the cutter 152. The edge detection by the edge detector 150 and the edge cutting by the cutter 152 may be configured to happen in real time. That is, the edge detection by the edge detector 150 may be configured to happen instantaneously prior to or slightly ahead of the edge cutting by the cutter 152. There may be a slight delay of a predetermined time period between the edge detection by the edge detector 150 and the edge cutting by the cutter 152. For example, the delay between the edge detection by the edge detector 150 and the edge cutting by the cutter 152 may be 20 milliseconds. The delay between the edge detection by the edge detector 150 and the edge cutting by the cutter 152 may be 30 milliseconds. The delay between the edge detection by the edge detector 150 and the edge cutting by the cutter 152 may be 12 milliseconds. The delay between the edge detection by the edge detector 150 and the edge cutting by the cutter 152 may be 10 milliseconds. The delay between the edge detection by the edge detector 150 and the edge cutting by the cutter 152 may vary. In one embodiment, the delay can be between 5 to 100 milliseconds. In other embodiments where throughput timing is not an issue, the delay can be greater than 100 milliseconds. The delay between the edge detection by the edge detector 150 and the edge cutting by the cutter 152 may be based on the robot controller.

The edge detector 150 and the cutter 152 may be mounted on the same arm of a robot of the system 200. This robot arm may be referred to as a first robot arm and may be configured to support the cutter 152 and the edge detector 150 (also referred to as the first edge detector). The edge detector 150 and the cutter 152 are mounted on the same axis of the robot. The edge detector 150 and the cutter 152 are fixedly disposed with respect to each other. The edge detector 150 and the cutter 152 are disposed such that they both are at a predetermined distance from each other. In one embodiment, the predetermined distance between the edge detector 150 and the cutter 152 may be 20 to 30 millimeters. In another embodiment, the predetermined distance between the edge detector 152 and the cutter 150 may vary and may be larger than 20 to 30 millimeters. In another embodiment, the predetermined distance between the edge detector 152 and the cutter 150 may depend on the tilt angle of the edge detector 150. The title angle of the edge detector 150 may an angle by which the edge detector 150 is tilted to determine a configuration of the edge 130, 134 of the first blank 114. The edge detector 150 may be configured to generate the laser/optical beam in a circular field of view and the radius of this field of view is 30 millimeters. That is, edge detector 150 may be configured to detect within the width of 60 millimeters.

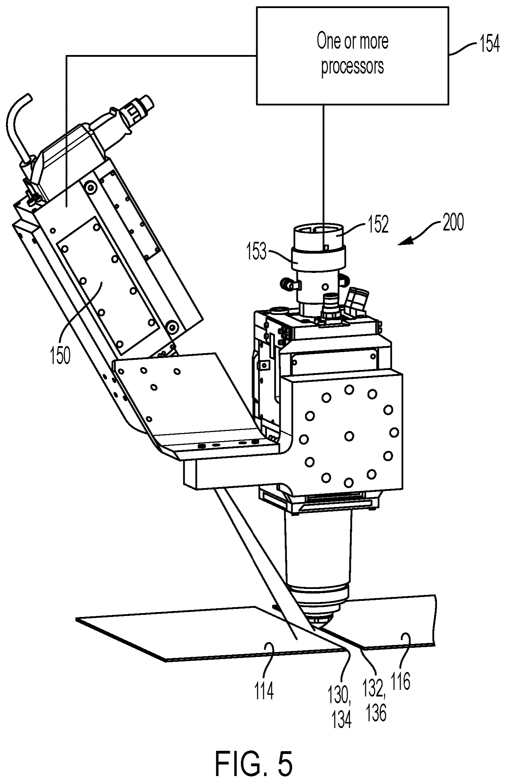

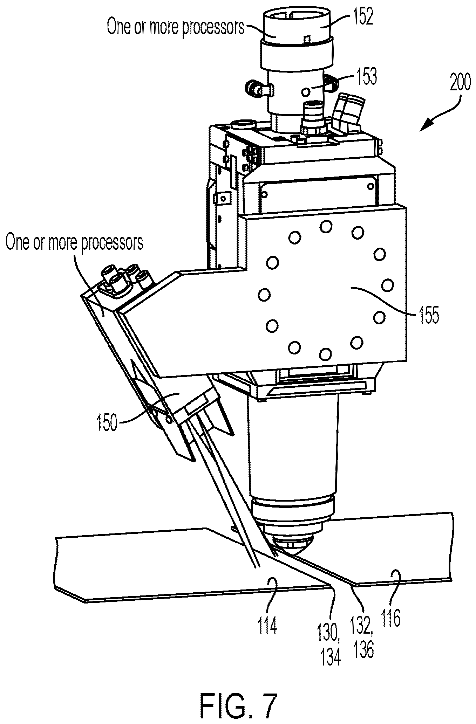

As will be clear from the discussions in detail below, the edge detector 150 may be an optical coherence tomography (OCT) detector as shown in and described with respect to FIGS. 5-6B. The edge detector 150 may be a camera based system through vision. The edge detector 150 may be a laser triangulation sensor as shown in and described with respect to FIGS. 7-8B.

The first blank 114 may be a first subassembly 114 (e.g., of a door ring of the automobile or of an automobile component). The first blank/subassembly 114 may include two or more blanks 102, 104, and 106. The blank 104 of the first blank/subassembly 114 may be configured to be held/secured in a fixed position using a fixture assembly, while blanks 102, 106 of the first blank/subassembly 114 may be configured to be movable, using fixture assemblies, with respect to the fixed blank 104 when the blanks 102, 104 and 106 are being welded to one another to form the first blank/subassembly 114. The blanks 102, 104 and 106 may also be interchangeably referred to as blank components.

The second blank 116 may be a second subassembly 116 (e.g., of the door ring or another automobile component). The second blank/subassembly 116 may include two or more blanks 108, 110, and 112. The blank 110 of the second blank/subassembly 116 may be configured to be held/secured in a fixed position using a fixture assembly, while blanks 108, 112 of the second blank/subassembly 116 may be configured to be movable, using fixture assemblies, with respect to the fixed blank 110 when the blanks 108, 110 and 112 are being welded to one another to form the second blank/subassembly 116.

International Patent Application Publication No. WO2021087604A1 ("International Patent Application '604") and its related U.S. National Phase Patent Application No. 20220388101A1 ("U.S. Patent Application '101"), which are both titled "fixture assembly for supporting blanks during shearing and welding operations", are commonly owned by the Applicant of the present patent application. The disclosures of the International Patent Application '604 and the U.S. Patent Application '101 are hereby incorporated by reference in the present patent application in their entirety. Also, the disclosure of the International Patent Application '219 is hereby incorporated by reference in the present patent application in its entirety. The disclosures of the International Patent Application '604, the U.S. Patent Application '101 and the International Patent Application '219 provide the fixture assemblies that typically are configured for holding/securing the blanks in place during the laser welding operation. The present patent application may include fixture assemblies that are described in detail in the International Patent Application '604, the U.S. Patent Application '101 and the International Patent Application '219.

The cutter 152 may interchangeably referred to as a laser cutter, a laser head cutter, a laser cutting head, a trimming device or a shearing device. The cutting operation of the edge of the first subassembly 114 may also be referred to as a shearing operation or a trimming operation. The cutting, shearing and trimming may be interchangeably used in the present patent application.

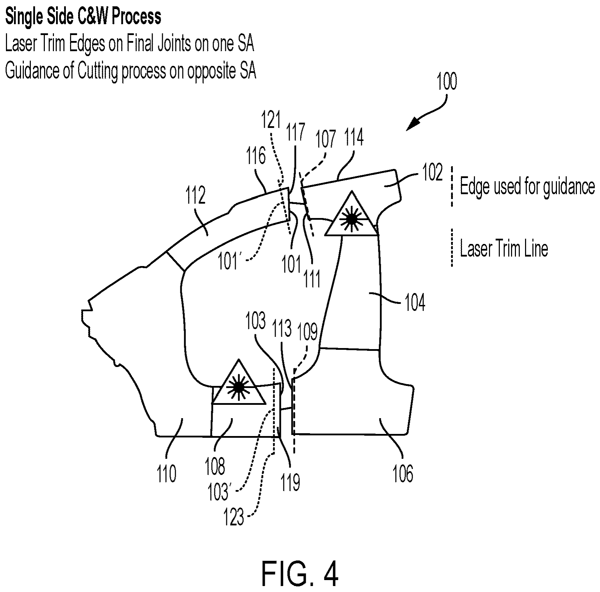

The cutter 152 may be configured for cutting the blank 116. In other embodiments, other shearing/trimming devices or methods may be used. In the event that a laser cutter is employed, the second blank 116 may be configured to face the laser cutting beam. As shown in FIG. 4, by cutting the second blank 116 along the laser cut line 121, one segment of scrap 117 will break from the second blank 116 after cutting. Similarly, as shown in FIG. 4, by shearing the second blank 116 along the laser cut line 123, one segment of scrap 119 will break from the second blank 116 after cutting. The cutter 152 may be configured to be connected to a motor 153 that controls movement of the cutter 152 based on the input (e.g., the configuration of the edge of the first blank/blank subassembly 114) from the edge detector 150. The configuration of the laser cut lines may be determined by the one or more processors 154 based on the configuration of the detected edge of the first blank/blank subassembly 114.

In one embodiment, the motor may be part of the system of the present patent application. In another embodiment, the motor may be part of the fixture assembly. For example, the right hand section (e.g., blanks 102, 104, and 106) may be fixed inside the clamping fixture assembly. The left hand section (e.g., blanks 108, 110, and 112) may be moved to the right side (i.e., towards the right hand section) after the cutting process/procedure. The motor may be located inside of the clamping fixture assembly that contains all of the parts. As the left hand section only needs to make a one-directional movement to the right side, a pneumatic cylinder may be used underneath the left hand section. The pneumatic cylinder may also be located outside of the left hand section. The motor may also be a hydraulic motor. The motor may also be a servo/an electric motor. The design of the clamping fixture assembly is described in detail in U.S. Patent Application '101, which is incorporated by reference herein in its entirety, and will not described in detail again here.

The cutter 152 may be a laser cutter that is configured to generate a laser beam to cut a portion of an edge of one of the first and second blanks/blank subassemblies 114, 116. The beam axis (e.g., centrally disposed) of the laser beam that extends substantially perpendicular to surfaces of the first and second blanks/blank subassemblies 114, 116.

The welder 156 may be a laser welder that is configured to generate a laser beam to melt a portion of at least one and/or both of the first and second blanks/blank subassemblies 114, 116. The beam axis (e.g., centrally disposed) of the laser beam that extends substantially perpendicular to surfaces of the first and second blanks/blank subassemblies 114, 116.

The welder 156 may be an arc welder. The welder 156 may be any other type of welder as would be appreciated by a person of ordinary skill in the art. The welding process/procedure may be performed after the cutting process/procedure. In another embodiment, the cutting process/procedure may be executed without performing a welding process/procedure afterwards (i.e., welding process/procedure is not performed after the cutting process/procedure). The welding process/procedure may include using a filler material such as a filler wire, filler powder, etc.

The system 200 may also include a second robot arm that is configured to support the welder 156. The second robot arm of the system 200 may support the welder 156 and optionally support a second edge detector. That is, the second robot arm of the system 200 supports the welder (and its corresponding edge detector), while the first robot arm of the system 200 may be configured to support the cutter 152 (and its corresponding edge detector). The one or more processors 154 may be configured to control the welder 156 to weld the edges of the second blank 116 and the first blank 114 based on the detected configuration of the weld interface (between the second blank 116 and the first blank 114) detected, for example, by the second edge detector. The second edge detector may interchangeably be referred to as seam tracking detector. The second edge detector may be an optical coherence tomography (OCT) detector. The second edge detector may be a camera based system through vision. The second edge detector may be a laser triangulation sensor.

The one or more processors 154 may be configured to control the movement and/or the operation of the cutter 152 during the laser cutting procedure to cut the edge of the second blank/blank subassembly 116 based on the detected configuration of the detected edge of the first blank/blank subassembly 114. The one or more processors 154 may be configured to control the cutter 152 so as to control the movement of the laser beam, e.g., via an actuator that physically moves the laser source(s)/generator(s) and/or an optical system that moves the laser beam without moving the laser generator(s). Based on the configuration of the detected edge of the first blank/blank subassembly 114, the one or more processors 154 may be configured to control the movement of the laser beam along the edge of the blank/blank subassembly 116 to form the cut edge of the blank/blank subassembly 116. The one or more processors 154 may be configured to control the shape of the laser beam so as to vary the laser beam shape over time during the cutting process/procedure.

The one or more processors 154 may be configured to control the movement and/or the operation of the welder 156 during the laser weld procedure (e.g., based on the detected configuration of the weld interface between the blanks 114 and 116). The one or more processors 154 may be configured to control the welder 156 so as to control the movement of the laser beam, e.g., via an actuator that physically moves the laser generator(s) and/or an optical system that moves the laser beam without moving the laser generator(s). The one or more processors 154 may be configured to control the movement of the laser beam across the surfaces of the blanks/blank subassemblies 114, 116. In one or more embodiments, the one or more processors 154 is configured to control the shape of the laser beam so as to vary the laser beam shape over time during the welding process/procedure.

The one or more processors 154 may be operatively connected to the welder 156 and may be configured to offset the laser beam in a lateral direction relative to the weld interface between the first and second blanks/blank subassemblies 114, 116 and towards one of the first and second blanks/blank subassemblies 114, 116 based on relative thickness of the first and second blanks/blank subassemblies 114, 116. For example, the first thickness of the first blank/blank subassembly 114 may be greater than the second thickness of the second blank/blank subassembly 116. The laser beam may be offset in the lateral direction relative to the weld interface and towards the first/thicker blank/blank subassembly 114 to be in an offset configuration. The laser beam may be maintained in the offset configuration substantially along the entire longitudinal length of the weld interface. According to various embodiments, the laser beam does not reciprocate in a direction transverse to the direction of the weld joint/interface as the laser beam progresses along the weld joint/interface. In another embodiment, the first thickness of the first blank/blank subassembly 114 may be smaller than the second thickness of the second blank/blank subassembly 116. The laser beam may be offset in the lateral direction relative to the weld interface and towards the second/thicker blank/blank subassembly 116 to be in an offset configuration. The laser beam may be maintained in the offset configuration substantially along the entire longitudinal length of the interface. The laser beam of the welder may be generally aimed at the middle of the gap/weld interface between the two blanks/blank subassemblies 114, 116 when the two blanks/blank subassemblies 114, 116 have the same thickness.

FIG. 4 shows a single side cut and weld procedure of the present patent application. The system/method/procedure of the present patent application may interchangeably referred to as the single cut system/method/procedure as there is only one or a single cut being made on the edge 101 of the second subassembly 116 based on the detected edge 111 of the first subassembly 114. Similarly, there is only one or a single cut being made on the edge 103 of the second subassembly 116 based on the detected edge 113 of the first subassembly 114. That is, there are no cuts being made on the detected edges 111, 113 of the first subassembly 114. The detected edges 111, 113 of the first subassembly 114 are shown by lines 107 and 109 in FIG. 4. In other words, laser cut edges are only on the second subassembly 116, while the detected edges 111, 113 are on the first subassembly 114. There are no cuts made on the detected edges 111, 113 of the first subassembly 114. The detected edges 111, 113 on the first subassembly 114 are used for guidance for cutting the edges 101, 103 of the second subassembly 116. The detected edges 111, 113 of the first subassembly 114 in FIG. 4 are the same as the detected edges 130, 134 of the first subassembly 114 in FIGS. 2A-2C. The edges 101, 103 of the second subassembly 116 in FIG. 4 are the same as the edges 132, 136 of the second subassembly 116 in FIGS. 2A-2C.

After cutting the edges 101, 103 of the second subassembly 116 along the laser cut lines 121, 123, new cut edges 101', 103' are formed. The cut edges 101', 103' of the second subassembly 116 are offset from the original (uncut) edges 101, 103 of the second subassembly 116. As will be clear from the discussions in detail below, the cut edges 101', 103' of the second subassembly 116 are configured to match/align with the corresponding detected edges 111, 113 on the first subassembly 114.

In the prior art system shown in and described with respect to FIGS.19A-19D and 20, two cuts were being made at each weld interface (at which the weld joint will later be formed) between the first and the second subassemblies. That is, in the prior art system/method, there was a first cut made on the edge of the first subassembly and there was a second cut made on the edge of the second subassembly. By contrast, in the present patent application, only one or a single cut being made on the edge 101 of the second subassembly 116 based on the detected edge 111 of the first subassembly 114 and only one or a single cut being made on the edge 103 of the second subassembly 116 based on the detected edge 113 of the first subassembly 114.

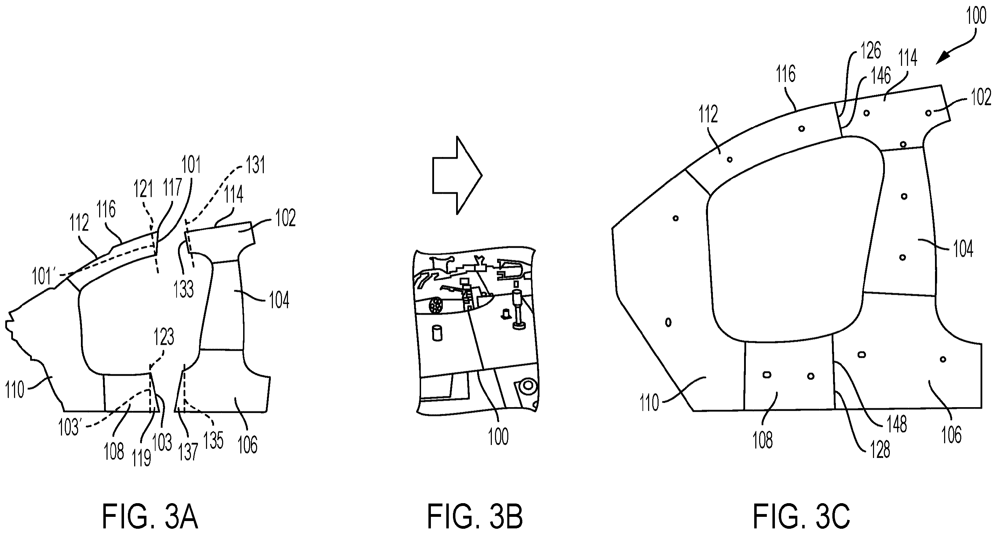

Although the detected edges 111, 113 are shown in FIG. 4 on the first subassembly 114 and the cut edges 101', 103' are shown in FIG. 4 on the second subassembly 116, in other embodiments, the edges of the first subassembly 114 may be cut (to form cut edges on the first subassembly) based on the detected edges on the second subassembly 116. In the event that the laser cutter 152 is employed, the first blank 114 may be configured to face the laser shearing beam. As shown in FIG. 3A, by cutting the first blank 114 along the laser trim line 131, one segment of scrap 133 will break from the first blank 114 after cutting. Similarly, as shown in FIG. 3A, by cutting the first blank 114 along the laser trim line 135, one segment of scrap 137 will break from the first blank 114 after cutting. It is to be noted that, although the laser cut lines and the scraps are shown in FIG. 3A on both the first blank 114 and the second blank 116, this is merely for illustrative purposes. According to the embodiments of the present patent application, only one of the two blanks/subassemblies will be cut using the detected edge of the other blank/subassembly and the other of the two blanks/subassemblies will not be cut (and will only be used for the edge detection). In one embodiment, as shown in FIG. 4, portions of the second blank 116 are being cut by the cutter 152, while the edges of the first blank 114 is being detected by the edge detector 150. In another embodiment, portions of the first blank 114 may cut, while the edges of the second blank 116 may detected by the edge detector 150.

Referring to FIG. 4, the cut edge 101', 103' (cut along the laser trim lines 121, 123) of the second blank 116 may be substantially a negative image of the detected edge 111, 113 (along the lines 107, 109) of the first blank 114. The cut edge 101', 103' (cut along the laser trim lines 121, 123) of the second blank 116 may be substantially a mirror image of the detected edge 111, 113 (along the lines 107, 109) of the first blank 114. The cut edge 101', 103' (cut along the laser trim lines 121, 123) of the second blank 116 may be configured to conform to the detected edge 111, 113 (along the lines 107, 109) of the first blank 114. After cutting (along the laser cut lines 121, 123), the cut edges 101', 103' of the second blank 116 are generally parallel to the detected edge 111, 113 of the first blank 114.

Referring to FIGS. 4-8B, the portions of the edge 101, 103 of the second blank 116 are being cut by the cutter 152 based on the portions of the edge 111, 113 of the first blank 114 that are detected by the edge detector 150. The portions of the edge 111, 113 of the first blank 114 are detected by the edge detector 150 before the portions of the edge 101, 103 of the second blank 116 are being cut by the cutter 152. The portions of the edge 111, 113 of the first blank 114 are detected by the edge detector 150 a predetermined time period before portions of the edge 101, 103 of the second blank 116 are being cut by the cutter 152.

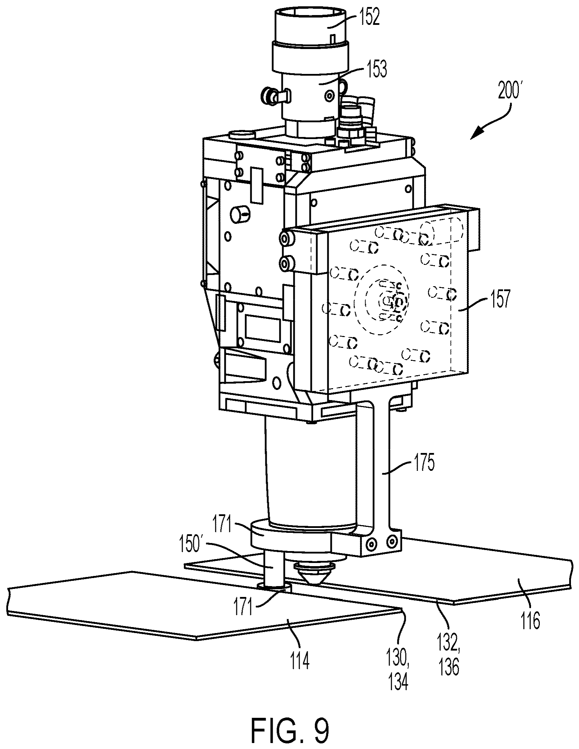

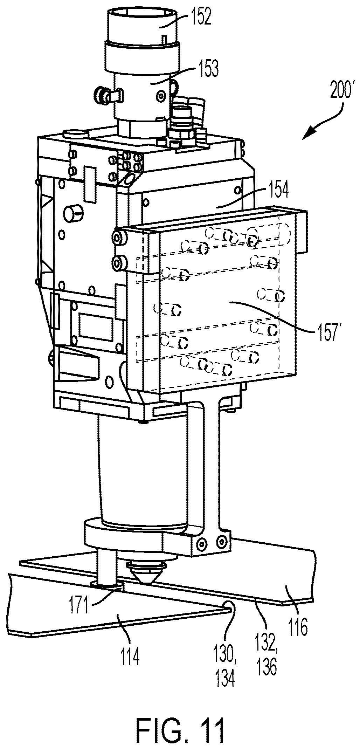

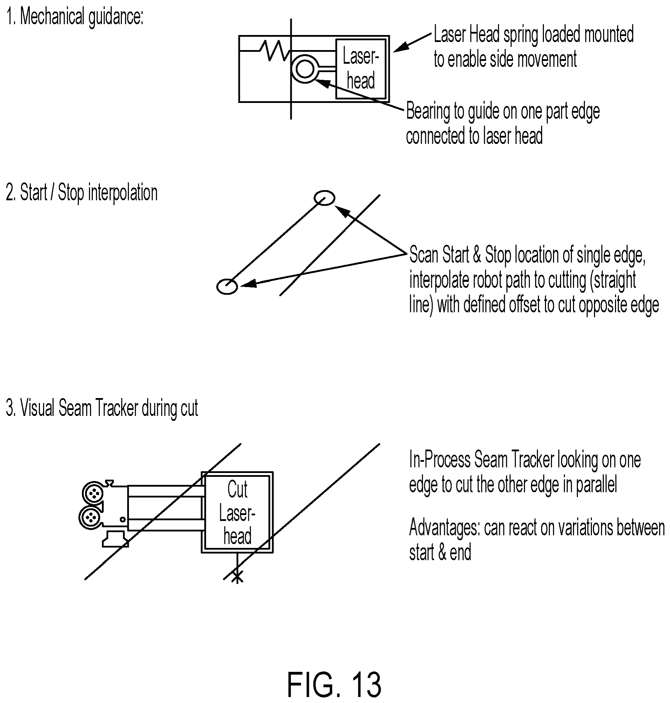

FIG. 13 shows three basic/initial implementations/embodiments of the single side cut system of the present patent application. Referring to FIG. 13, a first embodiment includes a mechanical guidance system in which the laser cutter is spring loaded and mounted to enable side movement. The mechanical guidance system also includes a bearing that is configured to guide on one part edge and is connected to the laser cutter. The mechanical guidance implementation/embodiment is further improved by Applicant of the present patent application and the improved mechanical guidance system is shown in and described in detail with respect to FIGS. 9-10B (e.g., tilting mechanical guidance) and FIGS. 11-12B (e.g., sliding mechanical guidance).

Although a mechanical spring may be used in some embodiments of the mechanical guidance system, in other embodiments, a pneumatic spring or similar mechanism may be used. In one embodiment, other mechanisms (including a possibility for a load to move it) may be used to perform the function of the spring. Although a roller bearing may be used in some embodiments of the mechanical guidance system, in other embodiments, a tactile sensor may be used to perform similar function.

In FIG. 13, a second embodiment includes a start and stop implementation/embodiment in which a start location and a stop location of a single edge is scanned/detected. For example, the single edge include the edge of the first blank. The system is also configured to interpolate the robot path of the laser cutter (e.g., straight line) with defined offset to the cut the opposite edge (e.g., the edge of the second blank). This system of the second embodiment in FIG. 13 may not be able to react on variations between the start location and the stop location of the single edge (e.g., curvature). In another embodiment, measurements of more points (e.g., more than 2 points) than just the start location and the stop location may be used for the interpolation of the robot path of the laser cutter. For example, a third point in the middle of the edge (e.g., between the start location and the stop location) may be used to accommodate for slight curvature of the edge.

Also, referring to FIG. 13, a third embodiment includes a visual seam tracker that is configured to track an edge of the first blank while an edge of the second blank is being cut. That is, the visual seam tracker system includes in-process seam tracker that is configured to track/look at one edge (of the first blank) and to cut the other edge (of the second blank) in parallel. This system is configured to reach on variations between the start location and the stop location of the single edge (e.g., curvature). Reaction time, inertia of the system in the third embodiment of FIG. 13 and high deviations on the start location/point may cause inaccuracies in this system. The visual seam tracker system implementation/embodiment is further improved by Applicant of the present patent application and the improved visual seam tracker system is shown in and described in detail with respect to FIGS. 5-6B (e.g., optical coherence tomography detector) and FIGS. 7-8B (e.g., laser triangulation detector).

Referring to FIGS. 5-6B, the system 200 includes the edge detector 150, the cutter 152, and a sensor mounting assembly 155 that is configured to mount the edge detector 150 with respect to the cutter 152. In this embodiment, an optical coherence tomography (OCT) sensor may be used as the edge detector 150.

The optical coherence tomography (OCT) is an imaging technique that uses interferometry with short-coherence-length light to obtain micrometer-level depth resolution and uses transverse scanning of the light/optical/laser beam to form two- and three-dimensional images from the light reflected from the edge of the first blank/blank sub assembly 114. Short-coherence-length light can be obtained using a superluminescent diode (SLD) with a broad spectral bandwidth or a broadly tunable laser with narrow linewidth. Using this configuration, the OCT/edge detector 150 may configured to determine a configuration of the edge of the first blank/blank subassembly 114. The edge of the first blank/blank subassembly 114 may interchangeably referred to as the detected edge of the first blank/blank subassembly 114.

The cutter 152 may be located on the second blank/blank subassembly 116. The cutter 152 may be configured to project/transmit an optical/a laser beam onto the edge of the second blank/blank subassembly 116 so as to form the cut edge of the second blank/blank subassembly 116. Based on the configuration of the detected edge of the first blank/blank subassembly 114, the one or more processors 154 may be configured to control the movement of the beam of the cutter 152 along the edge of the second blank/blank subassembly 116 to form the cut edge of the blank/blank subassembly 116. As noted above, the cutter 152 may be configured to be connected to the motor 153 that controls movement of the cutter 152 based on the input (the configuration of the detected edge of the first blank/blank subassembly 114) from the edge detector 150. By cutting the second blank 116 along the trim line, one segment of scrap will break from the second blank 116 after cutting. The configuration of the cut lines may be determined by the one or more processors based on the configuration of the detected edge of the first blank/blank subassembly 114.

Referring to FIGS. 7-8B, the system 200 includes the edge detector 150, the cutter 152, and the sensor mounting assembly 155 that is configured to mount the edge detector 150 with respect to the cutter 152. In this embodiment, a laser triangulation sensor may be used as the edge detector 150.

The laser triangulation sensor/edge detector 150 may be located on the first blank/blank subassembly 114. The laser triangulation sensor/edge detector 150 may configured to project/transmit an optical/a laser beam (from an optical/a laser source) onto an edge of the first blank/blank subassembly 114. That is, through the laser a concentrated light beam is projected on the edge of the first blank/blank subassembly 114. The light is deflected in all directions by the edge of the first blank/blank subassembly 114. A part of this deflected light is received by a special line sensor (e.g., with small photo sensors in a row). That is, the laser triangulation sensor/edge detector 150 may configured to receive the light deflected from the edge of the first blank/blank subassembly 114 into a receiver (e.g., the line sensor). In sensors based on triangulation, the (laser) light source, the edge of the first blank/blank subassembly 114, and the line sensor form a triangle. Using this configuration, the laser triangulation sensor/edge detector 150 may configured to determine a configuration of this edge of the first blank/blank subassembly 114. This edge of the first blank/blank subassembly 114 may interchangeably referred to as the detected edge of the first blank/blank subassembly 114.

The configuration and/or operation of the cutter 152 in this embodiment are similar to those described in the previous embodiment (as shown in and described with respect to FIGS. 5-6B), and, therefore, the configuration and/or operation of the laser cutter 152 will not be described in detail here again. The mounting assemblies in FIGS. 5-6B and 7-8B may be the same. The mounting assemblies in FIGS. 5-6B and 7-8B may be slightly different (e.g., because of the sizes, shapes and configurations of the different sensors being used in FIGS. 5-6B and 7-8B).

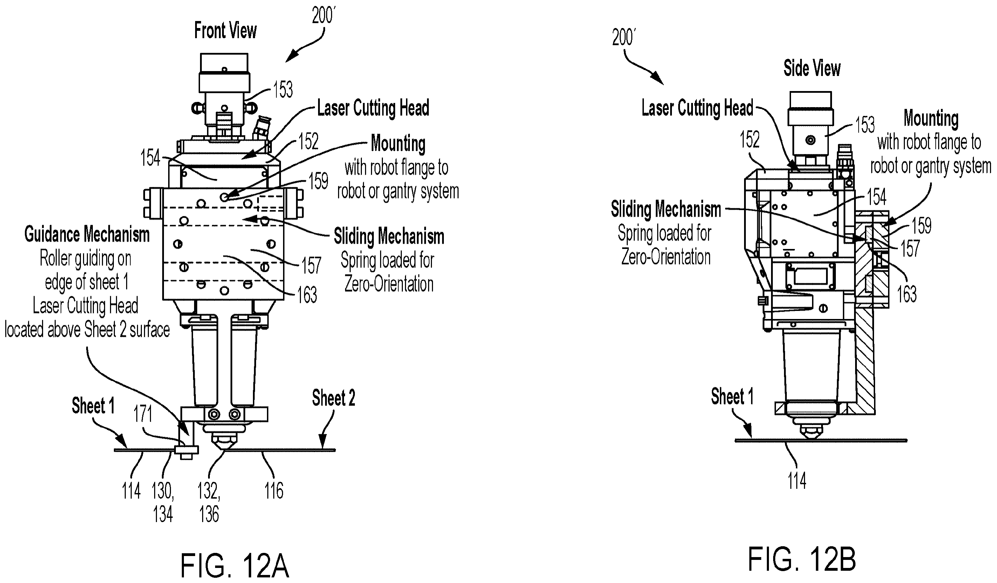

Referring to FIGS. 9-12B, a mechanical guidance system 200' is shown. Instead of using the optical or laser sensor (described in detail and as shown in FIGS. 5-8B) as the edge detector, in the embodiments of FIGS. 9-12B, a mechanical edge detector is used to detect the edge of the first blank 114. That is, the mechanical guidance system 200' includes the edge detector 150' that is configured to detect a configuration of an edge of the first blank 114; the cutter 152 configured to cut an edge of the second blank 116; a cutter movement assembly 157 operatively connected with the edge detector 150' and the cutter 152, the cutter movement assembly 157 controlling the cutter 152 to cut the edge of the second blank 116 into a configuration based on the detected configuration of the edge of the first blank 114; and the welder 156 configured to weld the detected edge of the first blank 114 to the cut edge of the second blank 116. The cutter movement assembly 157 may include a tilting mechanism 161 as shown in FIGS. 9-10B or may include a sliding mechanism 163 as shown in FIGS. 11-12B. The edge detector 150' may include a roller guide (a roller or a mechanical roller) 171 that is configured to guide on/along the edge of the first blank 114.

Some testing/trials conducted by the Applicant of the present patent application showed that using the mechanical solutions (e.g., as shown in and described with respect to FIGS. 9, 10A, 10B, 11, 12A, and 12B) can dramatically increase the robot movement speed during the cutting process/procedure (before 5m/min, now greater than 25m/min tested successfully, trying to speed up to 50m/min). These cutting speeds with still gap-free cutting enable the use of robots instead of gantry systems.

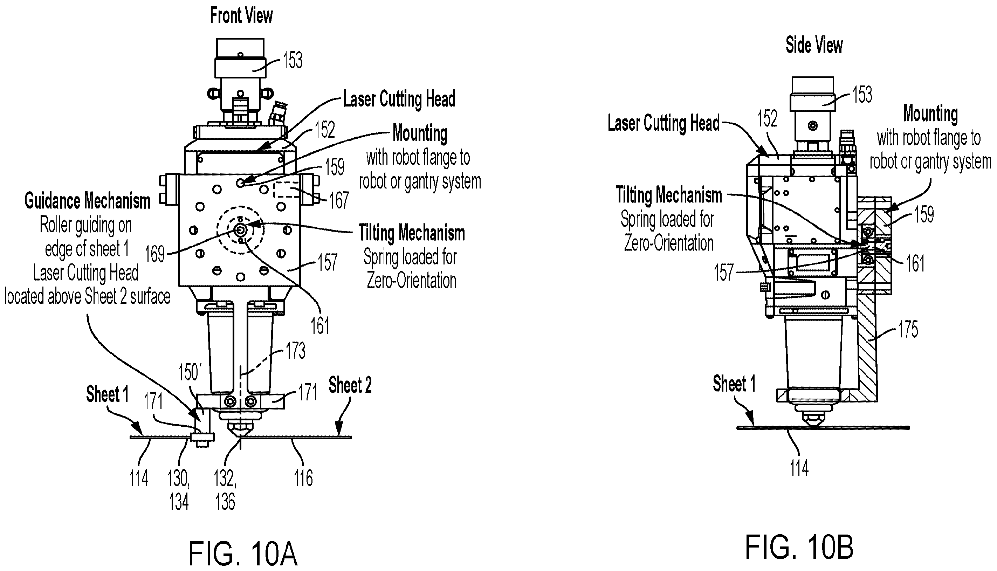

Referring to FIGS. 9-10B, a tilting mechanical guidance system 200' is shown. The tilting mechanical guidance system 200' may be the mechanical guidance system 200'. The tilting mechanical guidance system 200' may include the cutter movement assembly 157, the cutter 152 and the welder 156. FIGS. 9, 10A and 10B do not show the welder 156. Further, the welder does not need to be part of the system of the present patent application. In one (standard) procedure/system, only the cutter may be used without using a welder thereafter. In one embodiment, an exemplary double-head system (as shown in FIG. 1) may include the cutter and the welder combined. In another embodiment, the system of the present patent application may only include the cutter (i.e., without a welder).

The cutter movement assembly 157 may include the tilting mechanism 161 that is operatively connected with the edge detector 150' and the cutter 152. The tilting mechanism 161 may be configured to control the cutter 152 to cut the edge of the second blank 116 into a configuration based on the detected configuration of the edge of the first blank 114. The tilting mechanical guidance system 200' also includes mounting assembly 159 that is configured to mount the robot flange to the robot/gantry system, and the tilting mechanism 161. The tilting mechanism 161 may be configured to be spring loaded for zero-orientation. The spring loading is not only for zero orientation but also to ensure a constant contact force between the mechanical guidance and the edge. As mentioned above, the mechanical mechanism does not necessarily be a mechanical spring but the mechanical mechanism could also include any other type of mechanism that applies the correct force, such as a pneumatical load or (limited to the tilting mechanism) it could also be just a one-sided weight that generates the tilting force (torque).

The cutter movement assembly 157 may be spring loaded (e.g., at 167). The cutter 152 may be configured to be rotated by about 2 degrees about an axis 169. The cutter movement assembly 157 may be a spring loaded that pushes/rotates the cutter 152 around its middle axis. As mentioned above, any other mechanism to create the required torque may be used. For example, pneumatic, hydraulic, just a non-centered mass, etc. may be used. As the cutter 152 is being rotated about its axis, the cutter 152 may be configured to push the roller 150' against the edge of the first blank 114. The roller 150' may be a roller bearing and may be operatively connected to the cutter 152. For example, the roller 150' may be operatively connected to an annular member 171 that is configured to surround an axis 173 of the cutter 152. The annular member 171 may be operatively connected to the cutter movement assembly 157/tilt mechanism 161 using an intermediate member 175. For example, if there is a bump (or something like that) or a change in a configuration along the detected edge, the roller 150' is configured to move. This movement of the roller 150' may be configured to cause the tilting of the cutter 152 with respect to the axis 169. Thus, the cutter movement assembly 157 is configured to control the cutter 152 to cut the edge of the second blank 116 into a configuration based on the detected configuration of the edge of the first blank 114.

Referring to FIGS. 11-12B, a sliding mechanical guidance system 200' is shown. The sliding mechanical guidance system 200' may be the mechanical guidance system 200'. The sliding mechanical guidance system 200' may include the cutter movement assembly 157, the cutter 152 and the welder 156. FIGS. 11, 12A and 12B do not show the welder 156. Further, the welder does not need to be part of the system of the present patent application. In one (standard) procedure/system, only the cutter may be used without using a welder thereafter. In one embodiment, an exemplary double-head system (as shown in FIG. 1) may include the cutter and the welder combined. In another embodiment, the system of the present patent application may only include the cutter (i.e., without a welder).

The cutter movement assembly 157 may include the sliding mechanism 163 that is operatively connected with the edge detector 150' and the cutter 152. The sliding mechanism 163 may be configured to control the cutter 152 to cut the edge of the second blank 116 into a configuration based on the detected configuration of the edge of the first blank 114. The sliding mechanical guidance system 200' also includes mounting assembly 159 that is configured to mount the robot flange to the robot/gantry system, and the sliding mechanism 163. The sliding mechanism 163 may be configured to be spring loaded for zero-orientation. The sliding mechanism may include other mechanisms/device that are configured to apply a linear force, such as pneumatic load, etc.

Other than the difference between the tilting mechanical guidance in FIGS. 9-10B and the sliding mechanical guidance in FIGS. 11-12B, the configuration and/or operation of other systems/components of these systems are the same and, therefore, they will not be described in detail here again. A difference between the rotating and the tilting solution is that, in the rotating solution, any horizontal shift of the blank edge may also result in a vertical shift of the cutter towards the second blank surface. Excessive distance between the cutter and the surface of the sheet 2 that could potentially lead to bad cutting quality and burr.

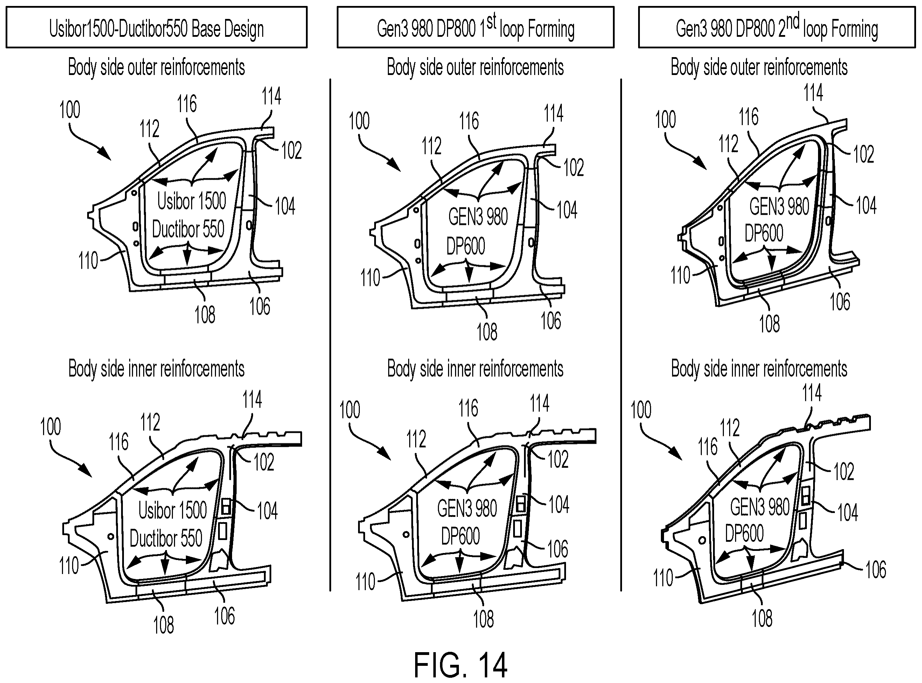

FIG. 14 shows body side outer reinforcements and body side inner reinforcements of the door ring 100. As explained in detail below, the body side outer reinforcements and body side inner reinforcements of the door ring 100 may be made using different materials.

The blank components 102, 104 and 106 of the first subassembly 114 and the blank components 108, 110 and 112 of the second subassembly 116 may be include different materials than one another for providing different characteristics at different locations of the door ring 100, for example, to provide different strength and weight attributes along different regions. For example, the three uppermost blank components 102, 104, 112 may be made of an uncoated material, and the three lowermost blanks 106, 108, 110 can be made of a hot-dipped/coated material. This may be the case for the door ring design. In other embodiments, it may be different for other applications such as cradles.

As shown in FIG. 14, some of the blank components 102, 104 and 106 of the first subassembly 114 and some of the blank components 108, 110 and 112 of the second subassembly 116 may be made from a high strength steel material, while other of the blank components 102, 104 and 106 of the first subassembly 114 and other of the blank components 108, 110 and 112 of the second subassembly 116 may be made from a low strength steel material.

For example, as shown in FIG. 14, the blank components 102, 104, and 112 may be made from a high strength steel material , while the blank components 106, 108, 110 may be made from a low strength steel material.

The cutting process/procedure may not be limited to the above mentioned materials or material combinations. It is not even limited to steel material and may be applied, for example, to aluminum material (e.g., aluminum door rings or other aluminum automotive parts/components) or other materials as well.

Also, as shown in FIG. 14, some of the blank components 102, 104 and 106 of the first subassembly 114 and some of the blank components 108, 110 and 112 of the second subassembly 116 may be made from dual-phase (DP) steel DP800, while other of the blank components 102, 104 and 106 of the first subassembly 114 and other of the blank components 108, 110 and 112 of the second subassembly 116 may be made from third generation advanced high strength steels (GEN3 AHSS), for example, U.S. Steel 980 GEN3 AHSS (980 XG3^{™} AHSS or GEN3 980). For example, as shown in FIG. 14, the blank components 102, 104, and 112 may be made from GEN3 980, while the blank components 106, 108, and 110 may be made from DP800.

Further, as shown in FIG. 14, some of the blank components 102, 104 and 106 of the first subassembly 114 and some of the blank components 108, 110 and 112 of the second subassembly 116 may be made from dual-phase (DP) steel DP600 and other of the blank components 102, 104 and 106 of the first subassembly 114 and the blank components 108, 110 and 112 of the second subassembly 116 may be made from third generation advanced high strength steels (GEN3 AHSS), for example, U.S. Steel 980 GEN3 AHSS (980 XG3^{™} AHSS). For example, as shown in FIG. 14, the blank components 102, 104, and 112 may be made from 980 XG3^{™} AHSS, while the blank components 106, 108, and 110 may be made from DP600.

Dual-phase steel (DP steel) is a high-strength steel that has a ferritic-martensitic microstructure. DP steels may be produced from low or medium carbon steels that are quenched from a temperature above A₁ but below A₃ determined from continuous cooling transformation diagram. This may result in a microstructure consisting of a soft ferrite matrix containing islands of martensite as the secondary phase. Martensite increases the tensile strength.

The blank components 102, 104 and 106 of the first subassembly 114 and the blank components 108, 110 and 112 of the second subassembly 116 may have various shapes depending on specific applications. For example, the blank components 102, 104, 112, 110 may be of different thicknesses/gauge to provide different strength and weight characteristics at different regions. Furthermore, it should be appreciated that the blanks/subassemblies 114, 116 may be cold-stamped prior to connection with one another.

Furthermore, fewer blank components may be employed to arrive at the final component, like the four piece door ring assembly instead of six piece door ring assembly. That is, instead of three blank components 102, 104 and 106, the first subassembly 114 may include only two blank components. Similarly, instead of three blank components 108, 110 and 112, the second subassembly 116 may include only two blank components. For example, in an underbody application or a cradle application, it is more likely to have more than one piece per side (left or right), that is, two to three pieces per side.

Instead of three blank components 102, 104 and 106, the first subassembly 114 may include only one blank component. Similarly, instead of three blank components 108, 110 and 112, the second subassembly 116 may include only one blank component. For example, in an automotive rail application, it would be possible to have only one piece per side.

In other embodiments, it would also be possible to have more than six components (more than 3 pieces per side) and, therefore, the system may potentially apply the cutting procedure multiple times.

FIGS. 15A-18D show cut and weld procedures for a double door ring 2223 of an automobile/car/vehicle. As shown, the double door ring 2223 may include two (closed) door rings 2225 and 2227. The door ring 2223 may include an A pillar 2229 with an upper A pillar portion 2229_{U} and a lower A pillar portion 2229_{L}, a B pillar 2231 with an upper B pillar portion 2231_{U} and a lower B pillar portion 2231_{L}, a C pillar 2233 with an upper C pillar portion 2233_{U} and a lower C pillar portion 2233_{L}, a roof rail portion 2235, and a frame rail portion 2237. The roof rail portion 2235 and the frame rail portion 2237 may include one or more portions each. The roof rail portion 2235 and the frame rail portion 2237 may extend along a longitudinal axis L-L of a body frame of the automobile. The A pillar 2229, the B pillar 2231, and the C pillar 2233 may extend substantially perpendicular to the longitudinal axis L-L of the body frame of the automobile, the roof rail portion 2235, and the frame rail portion 2237 may be substantially parallel to the longitudinal axis L-L of the body frame of the automobile. In one embodiment, the A pillar 2229, the B pillar 2231, and the C pillar 2233 may be substantially perpendicular to the longitudinal axis L-L of the body frame of the automobile. In another embodiment, the A pillar 2229, the B pillar 2231, and the C pillar 2233 may not be substantially perpendicular to the longitudinal axis L-L of the body frame of the automobile. The A pillar 2229, portions of the B pillar 2231, portions of the roof rail portion 2235, and portions of the frame rail portion 2237 may form the first closed door ring (or a front door ring) 2225. The C pillar 2233, portions of the B pillar 2231, portions of the roof rail portion 2235, and portions of the frame rail portion 2237 may form the second closed door ring (or a rear door ring) 2227.

FIGS. 15A-15D show cut and weld procedures for the door ring 2223 of an automobile in accordance with another embodiment of the present patent application, wherein blanks 2201-2213 formed by single blank trimming procedure are shown in FIG. 15A, a procedure for forming two (e.g., first and second) subassemblies 2114, 2116 of the door ring 2223 is shown in FIGS. 15B and 15C, a procedure for trimming/cutting/shearing an edge of the second subassembly 2116 based on a detected edge of the first subassembly 2114 (or trimming/cutting/shearing an edge of the first subassembly 2114 based on a detected edge of the second subassembly 2116) at each of the three weld interfaces WI₁, WI₂, WI₃ of the door ring 2223 is shown in FIG. 15C, and a procedure for welding the cut edges and the detected edges at each of the three weld interfaces WI₁, WI₂, WI₃ of the door ring 2223 is shown in FIG. 15D, wherein the door ring 2223 includes a double door ring.

FIGS. 16A-16D show cut and weld procedures for the door ring 2223 of the automobile in accordance with another embodiment of the present patent application, wherein blanks 2201-2213 formed by single blank trimming procedure are shown in FIG. 16A, a procedure for forming two (e.g., first and second) subassemblies 2114, 2116 of the door ring 2223 is shown in FIGS. 16B and 16C, a procedure for trimming/cutting/shearing an edge of the second subassembly 2116 based on a detected edge of the first subassembly 2114 (or trimming/cutting/shearing an edge of the first subassembly 2114 based on a detected edge of the second subassembly 2116) at each of the three weld WI₁, WI₂, WI₃ of the door ring 2223 is shown in FIG. 16C, and a procedure for welding the cut edges and the detected edges at each of the three weld interfaces WI₁, WI₂, WI₃ of the door ring 2223 is shown in FIG. 16D, wherein the door ring includes a double door ring.

The first blank 2114 may be a first subassembly 2114 (e.g., of the double door ring 2223 of the automobile or of an automobile component).

As shown in FIGS. 15A-15D, the first blank/subassembly 2114 may include blank 2205. The blank 2205 may also be interchangeably referred to as blank component.

As shown in FIGS. 16A-16D, the first blank/subassembly 2114 may include two or more blanks 2203 and 2205. One of the blanks 2203 and 2205 of the first blank/subassembly 2114 may be configured to be held/secured in a fixed position using a fixture assembly, while the other of the blanks 2203 and 2205 of the first blank/subassembly 2114 may be configured to be movable, using fixture assemblies, with respect to the fixed blank 2203/2205 when the blanks 2203 and 2205 are being welded to one another to form the first blank/subassembly 2114. The blanks 2203 and 2205 may also be interchangeably referred to as blank components.

The second blank 2116 may be a second subassembly 2116 (e.g., of the double door ring 2223 or another automobile component).

As shown in FIGS. 15A-15D, the second blank/subassembly 2116 may include a plurality of blanks 2201, 2203, 2207, 2209, 2211, and 2213. The blank 2201 of the second blank/subassembly 2116 may be configured to be held/secured in a fixed position using a fixture assembly, while blanks 2203, 2213 of the second blank/subassembly 2116 may be configured to be movable, using fixture assemblies, with respect to the fixed blank 2201 when the blanks 2201, 2203, and 2213 are being welded to one another to form a first part 2215 of the second blank/subassembly 2116. Similarly, the blank 2209 of the second blank/subassembly 2116 may be configured to be held/secured in a fixed position using a fixture assembly, while blanks 2207, 2211 of the second blank/subassembly 2116 may be configured to be movable, using fixture assemblies, with respect to the fixed blank 2209 when the blanks 2207, 2209, and 2211 are being welded to one another to form a second part 2217 of the second blank/subassembly 2116. Then, one of the parts 2215 and 2217 of the second blank/subassembly 2116 may be configured to be held/secured in a fixed position using a fixture assembly, while the other of the parts 2215 and 2217 of the second blank/subassembly 2116 may be configured to be movable, using fixture assemblies, with respect to the fixed part 2215/2217 when the parts 2215 and 2217 of the second blank/subassembly 2116 are being welded to one another to form the second blank/subassembly 2116.

As shown in FIGS. 16A-16D, the second blank/subassembly 2116 may include a plurality of blanks 2201, 2207, 2209, 2211, and 2213. The second blank/subassembly 2116 may also include a first part 2219, a second part 2221, and a third part/blank 2211. One of the blanks 2201 and 2213 of the second blank/subassembly 2116 may be configured to be held/secured in a fixed position using a fixture assembly, while the other of the blanks 2201 and 2213 of the second blank/subassembly 2116 may be configured to be movable, using fixture assemblies, with respect to the fixed blank 2201/2213 when the blanks 2201 and 2213 of the second blank/subassembly 2116 are being welded to one another to form the first part 2219 of the second blank/subassembly 2116. Similarly, one of the blanks 2207 and 2209 of the second blank/subassembly 2116 may be configured to be held/secured in a fixed position using a fixture assembly, while the other of the blanks 2207 and 2209 of the second blank/subassembly 2116 may be configured to be movable, using fixture assemblies, with respect to the fixed blank 2207/2209 when the blanks 2207 and 2209 of the second blank/subassembly 2116 are being welded to one another to form the second part 2221 of the second blank/subassembly 2116.

As shown in FIG. 16C, the third part/blank 2211 of the second blank/subassembly 2116 may be configured to be held/secured in a fixed position using a fixture assembly, while the parts 2219, 2221 of the second blank/subassembly 2116 may be configured to be movable, using fixture assemblies, with respect to the fixed part 2211 when the parts 2219, 2221, and 2211 are being welded to one another to form the second blank/subassembly 2116.

Referring to FIGS. 15A-15D and 16A-16D, three weld interfaces WI₁, WI₂, WI₃ (at which the weld joints will later be formed) are formed between the first and the second subassemblies 2114, 2116. As described in detail in the embodiments of this patent application, at each of the three weld interfaces WI₁, WI₂, WI₃, only one or a single cut being made on the edges of the second subassembly 2116 (or the edges of the first subassembly 2114) based on the detected edges of the first subassembly 2114 (or the detected edges of the second subassembly 2116). The laser cut/trim lines, the cut edges, the detected edges, and the scraps at each of the weld interfaces WI₁, WI₂, WI₃ are described in detail in the embodiments of this patent application. The cut edges of the second subassembly 2116 (or the cut edges of the first subassembly 2114) are configured to match/align with the corresponding detected edges on the first subassembly 2114 (or the corresponding detected edges on the second subassembly 2116) at the weld interfaces WI₁, WI₂, WI₃. Weld joints are formed at each of the weld interfaces WI₁, WI₂, WI₃ (including the cut edges and the detected edges) when the first and the second subassemblies 2114, 2116 are being connected to one another to form the double door ring assembly 2223.

FIGS. 17A-17C show cut and weld procedures for the door ring 2223 of the automobile in accordance with another embodiment of the present patent application, wherein blanks 2201-2213 formed by single blank trimming procedure are shown in FIG. 17A, a procedure for forming three (e.g., first, second, and third) subassemblies 2114, 2116, 2118 of the door ring is shown in FIG. 17B, a procedure for trimming/cutting/shearing an edge of one of the first/second/third subassembly 2114, 2116, 2118 based on a detected edge of the other of the first/second/third subassembly 2114, 2116, 2118 at each of the four weld interfaces WI₁, WI₂, WI₃, WI₄ of the door ring 2223 is shown in FIG. 17B, and a procedure for welding the cut edges and the detected edges at each of the four weld interfaces WI₁, WI₂, WI₃, WI₄ of the door ring 2223 is shown in FIG. 17C, wherein the door ring includes a double door ring.

The first blank 2114 may be a first subassembly 2114 (e.g., of the double door ring 2223 of the automobile or of an automobile component). As shown in FIGS. 17A-17C, the first blank/subassembly 2114 may include two or more blanks 2205 and 2211. One of the blanks 2205 and 2211 of the first blank/subassembly 2114 may be configured to be held/secured in a fixed position using a fixture assembly, while the other of the blanks 2205 and 2211 of the first blank/subassembly 2114 may be configured to be movable, using fixture assemblies, with respect to the fixed blank 2205/2211 when the blanks 2205 and 2211 are being welded to one another to form the first blank/subassembly 2114. The blanks 2205 and 2211 may also be interchangeably referred to as blank components.

The second blank 2116 may be a second subassembly 2116 (e.g., of the double door ring 2223 of the automobile or of an automobile component). As shown in FIGS. 17A-17C, the second blank/subassembly 2116 may include two or more blanks 2203, 2201 and 2213. The blank 2201 of the second blank/subassembly 2116 may be configured to be held/secured in a fixed position using a fixture assembly, while blanks 2203, 2213 of the second blank/subassembly 2116 may be configured to be movable, using fixture assemblies, with respect to the fixed blank 2201 when the blanks 2201, 2203, and 2213 are being welded to one another to form the second blank/subassembly 2116/2215.

The double door ring 2223 in FIGS. 17A-17C may also include a third subassembly 2118. The third subassembly 2118 (e.g., of the double door ring 2223 of the automobile or of an automobile component) may be interchangeably referred to as the third blank. The third blank/subassembly 2118 may include two or more blanks 2207 and 2209. One of the blanks 2207 and 2209 of the third blank/subassembly 2118 may be configured to be held/secured in a fixed position using a fixture assembly, while the other of the blanks 2207 and 2209 of the third blank/subassembly 2118 may be configured to be movable, using fixture assemblies, with respect to the fixed blank 2207/2209 when the blanks 2207 and 2209 of the third blank/subassembly 2118 are being welded to one another to form the third blank/subassembly 2118/2221.

Referring to FIGS. 17A-17C, four weld interfaces WI₁, WI₂, WI₃, WI₄ (at which the weld joints will later be formed) are formed between the first, second and third subassemblies 2114, 2116, 2118. For example, the weld interfaces WI₁, WI₂ may be formed between the first and second subassemblies 2114, 2116, while the weld interfaces WI₃, WI₄ may be formed between the first and third subassemblies 2114, 2118.

FIGS. 18A-18C show cut and weld procedures for the door ring 2223 of an automobile in accordance with another embodiment of the present patent application, wherein blanks 2201-2213 formed by single blank trimming procedure are shown in FIG. 18A, a procedure for forming three (e.g., first, second, and third) subassemblies 2114, 2116, 2118 of the door ring 2223 is shown in FIG. 18B, a procedure for trimming/cutting/shearing an edge of one of the first/second/third subassembly 2114, 2116, 2118 based on a detected edge of the other of the first/second/third subassembly 2114, 2116, 2118 at each of the four weld interfaces WI₁, WI₂, WI₃, WI₄ of the door ring 2223 is shown in FIG. 18B, and a procedure for welding the cut edges and the detected edges at each of the four weld interfaces WI₁, WI₂, WI₃, WI₄ of the door ring 2223 is shown in FIG. 18C, wherein the door ring 2223 includes a double door ring.

The first blank 2114 may be a first subassembly 2114 (e.g., of the double door ring 2223 of the automobile or of an automobile component). As shown in FIGS. 18A-18C, the first blank/subassembly 2114 may include two or more blanks 2205₂ and 2211. One of the blanks 2205₂ and 2211 of the first blank/subassembly 2114 may be configured to be held/secured in a fixed position using a fixture assembly, while the other of the blanks 2205₂ and 2211 of the first blank/subassembly 2114 may be configured to be movable, using fixture assemblies, with respect to the fixed blank 2205₂/2211 when the blanks 2205₂ and 2211 are being welded to one another to form the first blank/subassembly 2114. The blanks 2205₂ and 2211 may also be interchangeably referred to as blank components.

The second blank 2116 may be a second subassembly 2116 (e.g., of the double door ring 2223 of the automobile or of an automobile component). As shown in FIGS. 18A-18C, the second blank/subassembly 2116 may include two or more blanks 2203, 2201 and 2213. The blank 2201 of the second blank/subassembly 2116 may be configured to be held/secured in a fixed position using a fixture assembly, while blanks 2203, 2213 of the second blank/subassembly 2116 may be configured to be movable, using fixture assemblies, with respect to the fixed blank 2201 when the blanks 2201, 2203, and 2213 are being welded to one another to form the second blank/subassembly 2116/2215.

The double door ring 2223 in FIGS. 18A-18C may include a third subassembly 2118. The third subassembly 2118 (e.g., of the double door ring 2223 of the automobile or of an automobile component) may be interchangeably referred to as the third blank. The third blank/subassembly 2118 may include two or more blanks 2205₁, 2207 and 2209. The blank 2207 of the third blank/subassembly 2118 may be configured to be held/secured in a fixed position using a fixture assembly, while blanks 2205₁, 2209 of the third blank/subassembly 2118 may be configured to be movable, using fixture assemblies, with respect to the fixed blank 2207 when the blanks 2205₁, 2207 and 2209 of the third blank/subassembly 2118 are being welded to one another to form the third blank/subassembly 2118.

Referring to FIGS. 18A-18C, four weld interfaces WI₁, WI₂, WI₃, WI₄ (at which the weld joints will later be formed) are formed between the first, second and third subassemblies 2114, 2116, 2118. For example, the weld interfaces WI₁, WI₂ may be formed between the first and second subassemblies 2114, 2116, while the weld interfaces WI₃, WI₄ may be formed between the first and third subassemblies 2114, 2118.

As described in detail in the embodiments of this patent application, at each of the four weld interfaces WI₁, WI₂, WI₃, WI₄, in FIGS. 17A-17C and 18A-18C, only one or a single cut being made on the edges of the second subassembly 2116 and/or the edges of the third subassembly 2118 based on the detected edges of the first subassembly 2114. In another embodiment, only one or a single cut being made on the edges of the first subassembly 2114 based on the detected edges of the second subassembly 2116 and/or the third subassembly 2118. The laser cut/trim lines, the cut edges, the detected edges, and the scraps at each of the weld interfaces WI₁, WI₂, WI₃, WI₄ are described in detail in the embodiments of this patent application. The cut edges of the second subassembly 2116 and/or the cut edges of the third subassembly 2118 may be configured to match/align with the corresponding detected edges on the first subassembly 2114 at the weld interfaces WI₁, WI₂, WI₃, WI₄. In another embodiment, the cut edges of the first subassembly 2114 may be configured to match/align with the corresponding detected edges on the second subassembly 2116 and/or the third subassembly 2118 at the weld interfaces WI₁, WI₂, WI₃, WI₄. Weld joints are then formed at each of the weld interfaces WI₁, WI₂, WI₃, WI₄ (including the cut edges and the detected edges) when the first, second and third subassemblies 2114, 2116, 2118 are being connected to one another to form the double door ring assembly 2223.

The present patent application provides cut and weld procedures in which only single side cut (instead of two cuts) is made at each laser weld joint/interface. The present patent application is configured to eliminate the necessity of laser cutting on both sides (that are opposing each other) of the weld interface or both subassemblies that form the weld interface, by application of the edge tracking on the other subassembly.

The existing/prior art process/procedures for producing Tailored Welded Blanks (TWBs) for multi-part Door-Rings, for example, as shown in FIGS. 19A-19D and 20 and described in the background section may involve four laser cuts, which results in longer cycle times, higher production costs, increased material waste, and higher energy consumption. That is, in order to reduce the manufacturing costs and address the above noted disadvantages of the prior art systems and the prior art methods as shown in FIGS. 19A-19D and 20 and described in the background section, the system and the method of the present patent application is configured to eliminate two of the four laser cuts in order to minimize the production cost impact of the laser cutting. That is, the present patent application is configured to optimize the manufacturing process by reducing the number of laser cuts to improve efficiency and cost-effectiveness. The method of the present patent application is configured to provide cost benefit (including reduced cycle time, reduced cutting gas, etc.), to increase Overall Equipment Effectiveness (OEE), and to provide material savings.

Applicant of the present patent application has also realized the need for inline weld control, inline inspection, and seam tracking. The method of the present patent application is configured to provide joining technologies (multi-material or homogenous) to support next-generation Body-In-White (BIW) architectures. The method of the present patent application is configured to eliminate necessity of two parallel cuts by only cutting one side edge exactly parallel to the detected edge. That is, edge tracking is based on one edge to guide the cutting laser exactly parallel on the second edge.

By reducing the number of laser cuts, the present patent application is configured to achieve several objectives. First, the present patent application is configured to reduce production costs by minimizing the amount of time and resources required for laser cutting. Second, the present patent application is configured to decrease cycle time, allowing for faster production and increased throughput. Third, the present patent application is configured to reduce material waste by minimizing the amount of excess material that needed to be cut off. Finally, the present patent application is configured to lower energy consumption by reducing the overall laser cutting time. To achieve these objectives, the edge detector or a tracking device is applied to one of the existing part edges to guide the laser cutter along an exact negative curvature above the opposite blank, to cut an exact negative image of the existing edge.

By using one edge of the multi-piece door ring as a guidance (either mechanically or by the use of an optical scanner), it is possible to guide the robot (laser cutter) exactly along this edge curvature. This eliminates the necessity of cutting both edges of each cut, which eliminates the necessity of the execution of four laser cuts for a single multi piece door ring. The reduced number of laser cuts by half directly eliminates half of the cutting related costs.

The method of the present patent application is configured for producing accurate negative replicas of the existing blank edges using the laser cutting device.

The method of the present patent application also provides the following advantages. Reduction of laser cuts - the present patent application focuses on reducing the number of laser cuts required in the production process. By optimizing the cutting strategy, the present patent application is configured to minimize cycle time, production costs, material waste, and energy consumption. Precision and accuracy - the present patent application ensures that the cut edges of the tailored welded blanks (TWBs) are replicated with precision and accuracy This is achieved through the use of a tracking system and measurement techniques to maintain the desired quality and functionality of the final product. Flexibility multiple different ways of achieving this goal are inspected and can be used depending on the actual part/edge conditions, process requirements, accessibility and other limiting factors. Adaptability - the present patent application is designed to be adaptable to different manufacturing scenarios and can be implemented in various laser cutting systems. This flexibility allows for easy integration into existing production lines and enables customization based on specific requirements.

The method of the present patent application may be applied to all door rings. The method of the present patent application may also be applied to all parts that would require parallel laser cutting. The method of the present patent application may be applied to cut and weld blanks.

The method of the present patent application is configured to reduce cycle time, to reduce laser cycle time, to provide consumables and material savings, and to allow for usage of less complex robot program.

FIGS. 15A-18C show cut and weld procedures for the double door ring of the automobile. That is, in FIGS. 15C, 16C, 17B and 18B, at each of the weld interfaces WI, one of the two edges at the weld interface is subject to trimming/cutting/shearing procedure based on the detected edge (i.e., the other of the two edges) at the same weld interface.

In another embodiment, instead of the cut and weld procedures described in FIGS. 15A-18C, the double door ring of the automobile may be subject to a different (e.g., second) cut and weld procedures in which, at each of the weld interfaces WI, both the edges at the weld interface are subject to trimming/cutting/shearing procedures. That is, unlike in FIGS. 15C, 16C, 17B and 18B in which only one edge at each weld interface is being cut, in this second embodiment, both the edges at the weld interface are subject to trimming/cutting/shearing procedures.

According to this second embodiment, for a double door ring configuration that is similar to FIGS. 15C and 16C, a total number of six (e.g., laser) cuts (i.e., two at each of the weld interfaces WI₁, WI₂, and WI₃) may be required. This is different from the double door ring configuration in FIGS. 15C and 16C in which a total number of three (e.g., laser) cuts (i.e., one at each of the weld interfaces WI₁, WI₂, and WI₃) may be required.

Similarly, according to this second embodiment, for a double door ring configuration similar to FIGS. 17B and 18B, a total number of eight (e.g., laser) cuts (i.e., two at each of the weld interfaces WI₁, WI₂, WI₃ and WI₄) may be required. This is different from the double door ring configuration in FIGS. 17B and 18B in which a total number of four (e.g., laser) cuts (i.e., one at each of the weld interfaces WI₂, WI₃ and WI₄) may be required.

According the second embodiment, the two cuts formed at each weld interface to form the weld joint may include two parallel cuts.

In a single door ring configuration, as shown in the prior art FIGS. 19C and 20, all the four cuts (i.e., two cuts at each of the weld interfaces) of a single door ring may be generally parallel to a vertical y-axis or may be slightly angled with respect to the vertical y-axis.

By contrast, according to the second embodiment, in a double door ring configuration similar to that shown in FIG. 15C and 16C, all the six cuts (i.e., two cuts at each of the weld interfaces) of the double door ring may be generally parallel to a horizontal x-axis or may be slightly angled with respect to the horizontal x-axis.

Also, according to the second embodiment, in a double door ring configuration similar to that shown in FIG. 17B and 18B, all the eight cuts (i.e., two cuts at each of the weld interfaces) may include cuts that may be generally parallel to the horizontal x-axis or may be slightly angled with respect to the horizontal x-axis or cuts that may be generally parallel to the vertical y -axis and/or may be slightly angled with respect to the vertical y -axis.

The present patent application and its various embodiments as described above uniquely address the observed, noted and researched findings and improve on the prior and current state of the art systems. The listed products, features and embodiments as described in the present patent application should not be considered as limiting in any way.

Although the present patent application has been described in detail for the purpose of illustration, it is to be understood that such detail is solely for that purpose and that the present patent application is not limited to the disclosed embodiments, but, on the contrary, is intended to cover modifications and equivalent arrangements that are within the spirit and scope of the appended claims. In addition, it is to be understood that the present patent application contemplates that, to the extent possible, one or more features of any embodiment can be combined with one or more features of any other embodiment.

The illustration of the embodiments of the present patent application should not be taken as restrictive in any way since a myriad of configurations and methods utilizing the present patent application can be realized from what has been disclosed or revealed in the present patent application. The systems, features and embodiments described in the present patent application should not be considered as limiting in any way. The illustrations are representative of possible construction and mechanical embodiments and methods to obtain the desired features. The location and/or the form of any minor design detail or the material specified in the present patent application can be changed and doing so will not be considered new material since the present patent application covers those executions in the broadest form.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on,'' "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

The foregoing illustrated embodiments have been provided to illustrate the structural and functional principles of the present patent application and are not intended to be limiting. To the contrary, the present patent application is intended to encompass all modifications, alterations and substitutions within the spirit and scope of the appended claims.

## Claims

1. A system for welding blanks to one another, the blanks including a first blank and a second blank, wherein a weld joint is to be formed between the first blank and the second blank along a weld interface, the system comprising:
an edge detector configured to determine a configuration of an edge of the first blank;
a cutter configured to cut an edge of the second blank;
one or more processors operatively connected with the edge detector and the cutter, the one or more processors controlling the cutter to cut the edge of the second blank into a configuration based on the detected configuration of the edge of the first blank; and
a welder operatively connected with the one or more processors and configured to weld the detected edge of the first blank to the cut edge of the second blank.

2. The system of claim 1, wherein portions of the edge of the first blank are detected by the edge detector while portions of the edge of the second blank are being cut by the cutter.

3. The system of claim 2, wherein the portions of the edge of the second blank are being cut by the cutter based on the portions of the edge of the first blank that are detected by the edge detector.

4. The system of claim 2, wherein the portions of the edge of the first blank are detected by the edge detector before the portions of the edge of the second blank are being cut by the cutter.

5. The system of claim 4, wherein the portions of the edge of the first blank are detected by the edge detector a predetermined time period before portions of the edge of the second blank are being cut by the cutter.

6. The system of claim 1, wherein the cutter is connected to a motor that controls movement of the cutter based on the input from the edge detector.

7. The system of claim 1, wherein the cutter is a laser cutter.

8. The system of claim 1, wherein the welder is a laser welder.

9. The system of claim 1, wherein the cut edge of the second blank is substantially a negative image of the detected edge of the first blank.

10. The system of claim 1, wherein the cut edge of the second blank is substantially a mirror image of the detected edge of the first blank.

11. The system of claim 1, wherein the cut edge of the second blank is configured to conform to the detected edge of the first blank.

12. The system of claim 1, wherein the edge detector comprises an optical coherence tomography detector.

13. The system of claim 1, wherein the edge detector comprises a laser triangulation detector.

14. The system of claim 1, wherein the first blank is a first subassembly with two or more individual blanks welded to one another, and
wherein the second blank is a second subassembly with two or more individual blanks welded to one another.

15. The system of claim 1, further comprises
a cutter movement assembly operatively connected with the edge detector and the cutter, the cutter movement assembly controlling the cutter to cut the edge of the second blank into a configuration based on the detected configuration of the edge of the first blank.

16. The system of claim 1, wherein the edge detector comprises a roller guiding on the edge of the first blank, and
wherein the cutter movement assembly is operatively connected to the roller and is configured to move the cutter based on the detected configuration of the edge of the first blank.

17. The system of claim 15, wherein the cutter movement assembly includes a cutter tilting assembly that is configured to tilt the cutter based on the detected configuration of the edge of the first blank, and
wherein the cutter tilting assembly is configured to be spring loaded for zero-orientation.

18. The system of claim 15, wherein the cutter movement assembly includes a cutter sliding assembly that is configured to slide the cutter based on the detected configuration of the edge of the first blank, and
wherein the cutter sliding assembly is configured to be spring loaded for zero-orientation.

19. A method for welding blanks to one another, the blanks including a first blank and a second blank, wherein a weld joint is to be formed between the first blank and the second blank along a weld interface, the method comprising:
detecting, using an edge detector, a configuration of an edge of the first blank;
controlling, using one or more processors, a cutter to cut an edge of the second blank into a configuration based on the configuration of the edge of the first blank; and
welding, using a welder, the detected edge of the first blank to the cut edge of the second blank.

20. The method of claim 19, wherein the first blank and the second blank are welded to one another to form a door ring,
wherein the first blank includes a first blank of the door ring,
wherein the second blank includes a second blank of the door ring,
wherein the edge of the first blank and the edge of the second blank are two spaced edges that are welded on opposite sides of the door ring.

21. A system for cutting blanks, the blanks including a first blank and a second blank, the system comprising:
an edge detector configured to determine a configuration of an edge of the first blank;
a cutter configured to cut an edge of the second blank;
one or more processors operatively connected with the edge detector and the cutter, the one or more processors controlling the cutter to cut the edge of the second blank into a configuration based on the detected configuration of the edge of the first blank.

22. The method of claim 20, wherein the door ring is a single door ring.

23. The method of claim 20, wherein the door ring is a double door ring.

24. The method of claim 20, wherein the weld joint is a first weld joint and the weld interface is a first weld interface,
wherein the blanks further comprise a third blank,
wherein a second weld joint is to be formed between the second blank and the third blank along a second weld interface.

25. The method of claim 24, wherein the third blank includes a third blank of the door ring,
wherein the second blank and the third blank are welded to one another to form the door ring,
wherein the edge of the second blank and the edge of the third blank are two spaced edges that are welded on opposite sides of the door ring.

26. The method of claim 25, wherein the door ring is a double door ring.
